# EUROPÄISCHE PATENTSCHRIFT

(11) **EP 4 150 708 B1**
(45) Veröffentlichungstag und Bekanntmachung des Hinweises auf die Patenterteilung: **27.12.2023**
(21) Anmeldenummer: 22732902.6
(22) Anmeldetag: 24.05.2022
(51) Int. Cl.: H01Q 1/52, H01Q 21/06, H01Q 21/24, H01Q 21/28, H01P 5/22, H01Q 17/00

(54) **ANTENNENANORDNUNG, TRANSCEIVERANORDNUNG, KOMMUNIKATIONSSYSTEM, AKTUATOREINRICHTUNG UND VERFAHREN ZUM BETREIBEN EINER ANTENNENANORDNUNG**
ANTENNA ARRANGEMENT, TRANSCEIVER ARRANGEMENT, COMMUNICATION SYSTEM, ACTUATOR DEVICE AND METHOD OF OPERATING AN ANTENNA ARRANGEMENT
AGENCEMENT D'ANTENNE, AGENCEMENT D'ÉMETTEUR-RÉCEPTEUR ET SYSTÈME DE COMMUNICATION, DISPOSITIF D'ACTIONNEMENT ET PROCÉDÉ DE FONCTIONNEMENT D'UN DISPOSITIF D'ANTENNE

(30) Priorität: 17.06.2021 EP 21180140
(43) Veröffentlichungstag der Anmeldung: 22.03.2023
(73) Patentinhaber: ROSENBERGER HOCHFREQUENZTECHNIK GMBH & CO. KG, 83413 Fridolfing (DE)
(72) Erfinder: WINKLER, Johannes, 83373 Tengling (DE); REUTHER, Max Stephan, 84489 Burghausen (DE)
(74) Vertreter: Lorenz, Matthias
(86) Internationale Anmeldenummer: PCT/EP2022/063995
(87) Internationale Veröffentlichungsnummer: WO 2022/263119

(56) Entgegenhaltungen:
- US-A- 5 880 695
- US-A1- 2012 299 789
- US-A1- 2016 211 963
- US-A1- 2018 159 247

## Beschreibung

Die Erfindung betrifft eine Antennenanordnung für eine Transceiveranordnung, insbesondere für eine Hochfrequenz-Transceiveranordnung, vorzugsweise zur Verwendung innerhalb eines Vollduplex-Kommunikationskanals, aufweisend eine Sendeantennengruppe mit einer ersten Sendeantenne und einer zweiten Sendeantenne sowie eine Empfangsantennengruppe mit einer ersten Empfangsantenne und einer zweiten Empfangsantenne.

Die Erfindung betrifft außerdem eine Transceiveranordnung, aufweisend eine Antennenanordnung, eine Sendeeinheit und eine Empfangseinheit.

Die Erfindung betrifft ferner ein Kommunikationssystem, aufweisend eine erste Transceiveranordnung und eine zweite Transceiveranordnung, zur Bereitstellung einer drahtlosen Signalübertragung.

Außerdem betrifft die Erfindung eine Aktuatoreinrichtung, insbesondere ein Industrierobotersystem, aufweisend ein erstes Aktuatorglied, ein zweites Aktuatorglied und ein Kommunikationssystem mit einer ersten Transceiveranordnung und einer zweiten Transceiveranordnung.

Schließlich betrifft die Erfindung noch ein Verfahren zum Betreiben einer Antennenanordnung einer Transceiveranordnung, insbesondere einer Hochfrequenz-Transceiveranordnung.

Zur kontaktlosen bzw. drahtlosen Energie- und/oder Datenübertragung werden Antennenanordnungen aus einer Antenne oder mehreren Antennen verwendet. Zum gleichzeitigen Senden und Empfangen elektromagnetischer Wellen (sogenannter Vollduplex-Betrieb), also zur Verwendung der Antennenanordnung innerhalb eines Kommunikationskanals, der das Senden und Empfangen der Signale simultan bei gleicher Frequenz vorsieht ("Inband-Vollduplex"), ist eine hohe elektromagnetische Dämpfung bzw. Isolation zwischen Sender und Empfänger innerhalb desselben Transceivers wesentlich, um das Übersprechen bzw. um Interferenzen zwischen Sender und Empfänger zu vermeiden.

Daneben ist es in Radar-Anwendungen oft erforderlich, dass der Radar-Empfänger empfangsbereit ist, während der Radar-Sender Radar-Signale sendet. Da das Senden und Empfangen des Radarsignals meist auf der gleichen Frequenz erfolgt, ist eine hohe elektromagnetische Dämpfung bzw. Isolation zwischen den Sendeantennen und den Empfangsantennen eines Radarsystems erforderlich.

Um eine ausreichende elektromagnetische Isolierung zwischen Sender und Empfänger innerhalb eines Inband-Vollduplex-Kommunikationskanals bereitzustellen, sind bereits verschiedene technische Ansätze bekannt. Eine Möglichkeit ist die Übertragung mit verschiedenen Polarisationen (Polarisationsmultiplex / Polarisationsduplex), wobei die beiden Kommunikationspartner (nachfolgend mitunter als "Transceiveranordnungen" bezeichnet) die elektromagnetischen Wellen beispielsweise mit zirkularer Polarisation übertragen, bei jeweils unterschiedlicher Drehrichtung. Gemäß einer weiteren Technik werden die elektromagnetischen Wellen ausgehend von den beiden Kommunikationspartnern mit speziellen Abstrahlcharakteristika übertragen, um eine Interferenz zwischen Sender und Empfänger weitestgehend zu vermeiden. Als weiteres Beispiel sei eine metallische Schirmung zwischen Sende- und Empfangsantennen einer gemeinsamen Antennenanordnung genannt, wie in der Veröffentlichung "Circularly Polarized PIFA Array For Simultaneous Transmit And Receive Applications", A. Kee, M. Elmansouri, D. S. Filipovic, 2017 IEEE International Symposium on Antennas and Propagation, pp. 2303-2304, vorgeschlagen.

Das Isolationsverhalten der bekannten Antennenanordnungen ist mitunter allerdings nach wie vor nicht ausreichend oder kann nur durch außerordentlich komplexe Antennen- und Schaltungsanordnungen und damit hohem Herstellungs- und Kostenaufwand erreicht werden.

Zum weiteren technischen Hintergrund sei noch auf die US 2012/299789 A1 verwiesen, die eine Antennenanordnung zum wahlweisen Senden oder Empfangen elektromagnetischer Wellen betrifft. Die einzelnen Antennen sind als planare Leiter mit L-förmigem Schlitz ausgebildet, die parallel zu einer Masseebene angeordnet sind. Die US 2016/0211963 A1 betrifft eine Antenne, die mindestens eine Empfangsantenneneinheit, mindestens eine Sendeantenneneinheit, eine Sende- und Empfangsantenneneinheit, einen Signalausgangsanschluss und einen Signaleingangsanschluss aufweist. Die US 2018/0159247 A1 betrifft eine Antennenbaugruppe, die ein Trägerelement mit einer ersten und einer zweiten Seite umfasst, die einander gegenüberliegen, einen elektrischen Eingangskontakt und einen elektrischen Ausgangskontakt, ein erstes Array von Sende-Patch-Elementen und ein zweites Array von Empfangs-Patch-Elementen, wobei das erste Array und das zweite Array ein gemeinsames Phasenzentrum aufweisen.

In Anbetracht des bekannten Stands der Technik besteht die Aufgabe der vorliegenden Erfindung darin, eine gegenüber dem Stand der Technik verbesserte Antennenanordnung bereitzustellen, die vorzugsweise hohe Isolationseigenschaften zwischen Sender und Empfänger innerhalb desselben Transceivers bei vorzugsweise geringer Komplexität aufweist.

Schließlich ist es auch Aufgabe der Erfindung, eine Transceiveranordnung, ein verbessertes Kommunikationssystem und eine Aktuatoreinrichtung bereitzustellen, mit einer gegenüber dem Stand der Technik verbesserten Antennenanordnung, mit vorzugsweise hohen Isolationseigenschaften zwischen Sender und Empfänger innerhalb desselben Transceivers, bei vorzugsweise geringer Komplexität.

Außerdem ist es Aufgabe der Erfindung, ein gegenüber dem Stand der Technik verbessertes Verfahren zum Betreiben einer Antennenanordnung einer Transceiveranordnung bereitzustellen, das sich vorzugsweise für Inband-Vollduplex-Übertragungen eignet.

Die Aufgabe wird für die Antennenanordnung mit den in Anspruch 1 aufgeführten Merkmalen gelöst. Bezüglich der Transceiveranordnung wird die Aufgabe durch die Merkmale des Anspruchs 11, betreffend das Kommunikationssystem durch Anspruch 12 und hinsichtlich der Aktuatoreinrichtung durch Anspruch 14 gelöst. Betreffend das Verfahren zum Betreiben der Antennenanordnung wird die Aufgabe durch die Merkmale des Anspruchs 15 gelöst.

Die abhängigen Ansprüche und die nachfolgend beschriebenen Merkmale betreffen vorteilhafte Ausführungsformen und Varianten der Erfindung.

Es ist eine Antennenanordnung vorgesehen, insbesondere zur Verwendung innerhalb eines Vollduplex-Kommunikationskanals. Die Antennenanordnung eignet sich vorteilhaft zur Verwendung in einer Transceiveranordnung, insbesondere einer Hochfrequenz-Transceiveranordnung, beispielsweise gemäß den nachfolgenden Ausführungen.

Die Antennenanordnung weist erfindungsgemäß eine Sendeantennengruppe mit einer ersten Sendeantenne und einer zweiten Sendeantenne auf. Bei der ersten Sendeantenne und der zweiten Sendeantenne, die nachfolgend mitunter vereinfacht als "Sendeantennen" bezeichnet werden, handelt es sich vorzugsweise um planare Sendeantennen; gegebenenfalls können aber auch andere Antennenbauarten vorgesehen sein, insbesondere jedoch Richtantennen.

Unter einer "planaren" Antenne ist vorstehend und nachfolgend eine Antenne mit vornehmlich flacher und vorzugsweise ebener Ausprägung zu verstehen, die insbesondere zwei voneinander abgewandte, vorzugsweise parallel verlaufende Hauptflächen aufweist, also beispielsweise in der Art einer Scheibe, einer Beschichtung oder eines Plättchens. Insbesondere kann es sich bei einer planaren Antenne um eine Patchantenne oder um eine Schlitzantenne handeln, wie dies nachfolgend noch vorgeschlagen wird.

Erfindungsgemäß weist die Antennenanordnung außerdem eine Empfangsantennengruppe mit einer ersten Empfangsantenne und einer zweiten Empfangsantenne auf. Bei der ersten Empfangsantenne und der zweiten Empfangsantenne, die nachfolgend mitunter vereinfacht als " Empfangsantennen" bezeichnet werden, handelt es sich vorzugsweise um planare Empfangsantennen; gegebenenfalls können aber auch andere Antennenbauarten vorgesehen sein, insbesondere jedoch Richtantennen.

Die Sendeantennen und Empfangsantennen werden nachfolgend zur Vereinfachung mitunter auch ohne (optionale) Spezifizierungen wie "planar" genannt und teilweise außerdem unter dem Begriff "Antennen" zusammengefasst.

Bei den genannten Antennengruppen (Sendeantennengruppe und Empfangsantennengruppe) handelt es sich um jeweilige Antennenarrays, insbesondere um so genannte "Gruppenstrahler". So kann die Sendeantennengruppe ein Sendeantennenarray beschreiben, während die Empfangsantennengruppe ein Empfangsantennenarray beschreiben kann.

Erfindungsgemäß weist die Sendeantennengruppe einen ersten Balun (auch unter dem Begriff " Symmetrierglied bekannt") auf, wobei die erste Sendeantenne und die zweite Sendeantenne jeweils an einem symmetrischen Anschluss (differentieller Anschluss) des ersten Balun angeschlossen bzw. mit besagten symmetrischen Anschlüssen verbunden sind. Außerdem weist die Empfangsantennengruppe einen zweiten Balun auf, wobei die erste Empfangsantenne und die zweite Empfangsantenne jeweils an einem symmetrischen Anschluss des zweiten Balun angeschlossen bzw. mit besagten symmetrischen Anschlüssen verbunden sind. Ferner ist ein asymmetrischer Anschluss (Single-Ended-Anschluss) des ersten Balun mit einem Sendesignalpfad der Transceiveranordnung und ein asymmetrischer Anschluss des zweiten Balun mit einem von dem Sendesignalpfad unabhängigen Empfangssignalpfad der Transceiveranordnung verbindbar.

Mit anderen Worten bezeichnet ein symmetrischer Anschluss einen Anschluss einer symmetrischen Signalübertragung, während ein asymmetrischer Anschluss einen Anschluss einer asymmetrischen Signalübertragung bezeichnet.

Die Sendeantennen sind daher vorteilhaft differenziell miteinander verschaltet und vermögen ein über den Sendesignalpfad eingespeistes Sendesignal mit einem ersten Trägerfrequenzband zu senden. Die Empfangsantennen sind ebenfalls differentiell miteinander verschaltet und vermögen ein Empfangssignal mit einem zweiten Trägerfrequenzband über den Empfangssignalpfad weiterzuleiten.

Erfindungsgemäß ist vorgesehen, dass die Antennen eine relative räumliche Lage zueinander aufweisen, so dass ein Übersprechen zwischen der Sendeantennengruppe und der Empfangsantennengruppe durch die differenzielle Verschaltung deren jeweiliger Antennen zumindest reduziert wird. Diesbezüglich werden nachfolgend verschiedene Möglichkeiten, die sich auch in Kombination umsetzen lassen, beispielhaft dargelegt.

Es wird im Rahmen der vorliegenden Erfindung eine Antennenanordnung vorgeschlagen, die das Übersprechen zwischen Sendeantennen und Empfangsantennen trotz deren räumlicher

Nähe weitestgehend unterdrückt. Dies kann insbesondere dadurch gelöst werden, dass die beiden gemeinsam transmittierenden Sendeantennen derart zu den Empfangsantennen angeordnet werden, dass das Übersprechen der beiden Sendeantennen in die Empfangsantennen betragsmäßig gleichgroß, vom Vorzeichen jedoch umgekehrt ist. Das vorzeichenumgekehrte Übersprechen kann durch eine um 180° in der Phase verschobene Anregung der beiden Sendeantennen erreicht werden, wozu das vorstehend genannte Symmetrierglied bzw. der Balun, verwendet werden kann.

Erfindungsgemäß ist vorgesehen betragsmäßig gleichgroßes Übersprechen von den Sendeantennen zu den Empfangsantennen zu erreichen, indem die beiden Sendeantennen gegenüber der Empfangsantenne geometrisch gleich beabstandet angeordnet sind. Vorzugsweise können die Antennen so ausgebildet sein, dass sich außerdem gleich große Wirkflächen bzw. Wirkkanten der Sende- und Empfangsantennen entsprechend gegenüberliegen. Nachfolgend werden einige Möglichkeiten weiter ausgeführt.

In einer Weiterbildung der Erfindung kann vorgesehen sein, dass die Sendeantennen und die Empfangsantennen um einen gemeinsamen Mittelpunkt herum angeordnet sind.

Der gemeinsame Mittelpunkt der Antennen wird nachfolgend mitunter auch als "Drehzentrum" bezeichnet, was jedoch nicht bedeuten soll, dass die Antennen sich tatsächlich um das Drehzentrum bzw. den Mittelpunkt drehen bzw. drehbar sind (optional ist dies im Rahmen einer nachfolgend noch beschriebenen besonders vorteilhaften Verwendung der Erfindung allerdings durchaus möglich).

Es kann vorgesehen sein, dass die beiden Sendeantennen und die beiden Empfangsantennen so orientiert sind, dass deren Antennenhauptkeulen in dieselbe Richtung weisen, vorzugsweise parallel verlaufen. Insbesondere kann vorgesehen sein, dass das Phasenzentrum der Sendeantennengruppe mit dem Phasenzentrum der Empfangsantennengruppe zusammenfällt, und vorzugsweise außerdem mit dem gemeinsamen Mittelpunkt zusammenfällt.

Die Richtwirkung einer Antenne wird über deren Antennengewinn beschrieben. Dieser wird oft in einem Richtdiagramm in Kugelkoordinaten in Abhängigkeit des Elevationswinkels und Azimuthwinkels dargestellt. In einem Richtdiagramm ergeben sich dann durch die Abwechslung von Maxima und Minima des Antennengewinns die sogenannten "Antennenkeulen", wobei die Antennenkeule, welche das globale Maximum des Antennengewinns umfasst, als "Antennenhauptkeule" bezeichnet wird.

Insofern die Sendeantennen und die Empfangsantennen als planare Antennen ausgebildet sind kann vorgesehen sein, dass die Antennen mit ihren jeweiligen Hauptflächen parallel zu einer gemeinsamen Basisfläche um das gemeinsame Drehzentrum bzw. den gemeinsamen Mittelpunkt herum angeordnet sind.

Die Antennen können auf der Basisfläche aufliegen und/oder an der Basisfläche befestigt sein. Die Antennen können auch von der Basisfläche beabstandet sein oder in der die Basisfläche aufweisenden elektrischen Baugruppe, beispielsweise einer Leiterplatte, aufgenommen sein. Bei der Basisfläche kann es sich beispielsweise um eine Massefläche einer mehrlagigen Leiterplatte ("GND-Plane") oder um die oberste Schicht ("Top-Layer") einer mehrlagigen Leiterplatte handeln.

Vorzugsweise sind die beiden Sendeantennen auf derselben Höhenlage bzw. in derselben Beabstandung zu der Basisfläche angeordnet und/oder sind die beiden Empfangsantennen auf derselben Höhenlage bzw. in derselben Beabstandung zu der Basisfläche angeordnet. Besonders bevorzugt sind alle Antennen (Sendeantennen und Empfangsantennen) auf derselben Höhenlage bzw. in derselben Beabstandung zu der Basisfläche angeordnet.

Das gemeinsame Drehzentrum bzw. der gemeinsame Mittelpunkt ist vorzugsweise als Mittelpunkt einer gedachten Verbindungslinie zwischen den beiden Mittelpunkten bzw. geometrischen Schwerpunkten der beiden Sendeantennen ausgebildet. Das Drehzentrum befindet sich somit vorzugsweise mittig zwischen den beiden Sendeantennen.

Es kann vorgesehen sein, dass die Sendeantennen und/oder die Empfangsantennen um das Drehzentrum bzw. den gemeinsamen Mittelpunkt um 180° zueinander verdreht angeordnet sind. Besagte Verdrehung der Antennen kann sich unter anderem auf die geometrische Form der Antenne an sich (z. B. die nachfolgend noch genannte relative Ausrichtung der Symmetrie- oder sonstigen Achsen der Hauptflächen planarer Antennen) und/oder auf den Einspeisepunkt bzw. den Verlauf der Speiseleitung, die zu der jeweiligen Antenne führt, beziehen. Erfindungsgemäß ist vorgesehen, dass jede der Empfangsantennen zu beiden Sendeantennen denselben Mitte-zu-Mitte-Abstand aufweist.

Unter der "Mitte" bzw. dem "Mittelpunkt" einer Antenne, ausgehend von der bzw. von dem sich beispielsweise der Mitte-zu-Mitte-Abstand bestimmt, ist vorliegend insbesondere der geometrische Schwerpunkt der jeweiligen Antenne zu verstehen.

Die Antennenanordnung eignet sich insbesondere vorteilhaft, wenn die beiden Sendeantennen gegenphasig angeregt werden.

Die Erfinder haben erkannt, dass sich durch eine paarweise differenzielle Anregung der Sendeantennen in der beschriebenen Anordnung sehr gute Isolationseigenschaften zwischen Sender und Empfänger bzw. zwischen den Sendeantennen und den Empfangsantennen desselben Transceivers erzielen lassen.

Aufgrund der vorgeschlagenen Anordnung der Sendeantennen kommt es bei einem um 180° phasenverschobenen Übersprechen des Sendesignals in die Empfangsantennen zu einer Kompensation der von den Sendeantennen übersprechenden elektromagnetischen Wellen.

Die vorgeschlagene Erfindung ermöglicht es, Daten im Vollduplex-Betrieb auch bei einem Versatz zwischen den Kommunikationspartner zuverlässig zu übertragen. Insbesondere kann vorgesehen sein, dass die beiden Kommunikationspartner
- einen rotatorischen Versatz zueinander aufweisen, also um eine gemeinsame Drehachse zueinander verdreht sind, so dass die Sendeantennen des einen Kommunikationspartners nicht in einer Flucht mit den Empfangsantennen des anderen Kommunikationspartners ausgerichtet sind; und/oder
- einen translatorischen Versatz zueinander aufweisen, also ausgehend von einem Sollabstand zwischen den beiden Mittelpunkten der jeweiligen Antennenanordnungen weiter voneinander entfernt oder näher aneinander angenähert sind; und/oder
- einen axialen Versatz zueinander aufweisen, also einen Versatz zwischen den jeweiligen, durch die Mittelpunkte der Antennenanordnungen verlaufenden Mittelachsen aufweisen, so dass die Mittelachsen der Antennenanordnungen von einer koaxialen Ausrichtung abweichen; und/oder
- einen radialen Versatz zueinander aufweisen, also zueinander ausgehend von einer parallelen Ausrichtung der Antennenanordnungen verkippt sind.

Ein entsprechender Versatz kann toleranzbedingt auftreten oder anwendungsbedingt explizit vorgesehen sein. Insbesondere kann auch vorgesehen sein, dass sich ein Versatz erst im Laufe der Datenübertragung ergibt oder bewusst eingebracht wird, beispielsweise durch gezielte Verdrehung der Kommunikationspartner.

Gleichzeitig ist die Komplexität der vorgeschlagenen Antennenanordnung gering und lässt sich daher technisch einfach und kostengünstig umsetzen. Die Erfindung ermöglicht damit ein kostenoptimiertes Design einer Vollduplexkommunikation-Antennenanordnung oder einer Radar-Antennenanordnung, beispielsweise durch Heranziehen von Standard-Leiterplattenprozessen. Die vorgeschlagene Antennenanordnung ist einfach in beliebige Elektronikbaugruppen integrierbar.

In einer besonders bevorzugten Weiterbildung der Erfindung liegt den beiden Sendeantennen dieselbe geometrische Grundform zugrunde. Insbesondere kann vorgesehen sein, dass planaren Sendeantennen dieselbe geometrische Grundform deren Hauptflächen zugrunde liegt. Vorzugsweise weisen die beiden Sendeantennen einen identischen Aufbau auf, insbesondere hinsichtlich Geometrie, Material und/oder Position des Einspeisepunktes auf der Hauptfläche.

Grundsätzlich können die beiden Sendeantennen aber auch einen unterschiedlichen Aufbau aufweisen, vorzugsweise aber zumindest einen ähnlichen Aufbau - insbesondere soweit dies technisch realisierbar ist. Durch einen identischen oder zumindest im Wesentlichen identischen Aufbau der Sendeantennen kann die Dämpfung gegenüber den Empfangsantennen weiter verbessert sein.

Vorzugsweise, aber nicht notwendigerweise, liegt auch den beiden Empfangsantennen dieselbe geometrische Grundform zugrunde, insbesondere dieselbe Grundform wie die der Sendeantennen (vorzugsweise wiederum bezogen auf die Hauptflächen einer planaren Antenne). Vorzugsweise weisen die Empfangsantennen einen identischen oder zumindest einen im Wesentlich identischen Aufbau, besonders bevorzugt einen identischen oder zumindest im Wesentlichen identischen Aufbau wie die Sendeantennen, insbesondere hinsichtlich Geometrie, Material und/oder Position des Einspeisepunktes auf der jeweiligen Hauptfläche der Antenne.

Grundsätzlich kann sich die Erfindung zur Übertragung beliebiger elektromagnetischer Wellen mit beliebigen Wellenlängen bzw. Frequenzen eignen. Besonders vorteilhaft eignet sich die Erfindung allerdings zur Übertragung von elektromagnetischen Wellen im Frequenzbereich zwischen 40 GHz und 80 GHz, vorzugweise zwischen 50 GHz und 70 GHz, besonders bevorzugt zwischen 55 GHz und 65 GHz. Aufgrund der hohen Trägerfrequenzen kann sich eine sehr hohe Datenrate bei der Signalübertragung bei kurzer Reichweite ergeben, was eine besonders vorteilhafte Eignung der vorgeschlagenen Antennenanordnung für kontaktlose elektrische Verbinder ermöglicht, um eine herkömmliche Steckverbindung zu ersetzen. Auf diese vorteilhafte Anwendung der Erfindung wird nachfolgend noch näher eingegangen.

Die Übertragung bei entsprechend hohen Frequenzen bietet außerdem den Vorteil, dass mit steigender Frequenz die Freiraumdämpfung zunimmt (die Freiraumdämpfung steigt proportional mit dem Quadrat der Trägerfrequenz). Somit klingen die Signale der vorgeschlagenen Antennenanordnung, die in deren Umgebung entweichen, vergleichsweise schnell ab. Ferner erreichen innerhalb der Bandbreite liegende Störsignale die Antennenanordnung nur mit einer geringen Amplitude. Die Eigenschaft der schnell an Leistungsdichte verlierenden Signale bei hohen Frequenzen wird daher im Rahmen der Erfindung vorteilhaft ausgenutzt.

Die Bandbreite der Übertragung kann beispielsweise 3 GHz bis 20 GHz betragen, insbesondere ungefähr 10 GHz betragen.

Es kann vorgesehen sein, dass die erste Sendeantenne im Nahfeld der zweiten Sendeantenne angeordnet ist, vorzugsweise maximal eine halbe Freiraumwellenlänge einer zu übertragenden elektromagnetischen Welle von der zweiten Sendeantenne beabstandet ist. Auf diese Weise kann vermieden werden, dass sich Antennennebenkeulen ausbilden.

In einer vorteilhaften Weiterbildung der Erfindung kann vorgesehen sein, dass die Empfangsantennen und die Sendeantennen derart zueinander angeordnet sind, dass der Mitte-zu-Mitte-Abstand zwischen jeder Sende- und Empfangsantenne jeweils kleiner ist als die halbe Wellenlänge der zu übertragenden elektromagnetischen Welle.

Vorzugsweise ist die erste Empfangsantenne (und optional auch die zweite Empfangsantenne) um das gemeinsame Drehzentrum bzw. den gemeinsamen Mittelpunkt um 90° zu den Sendeantennen verdreht angeordnet.

Es kann vorgesehen sein, dass um das gemeinsame Drehzentrum bzw. den gemeinsamen Mittelpunkt umlaufend jeweils abwechselnd eine Sendeantenne und eine Empfangsantenne angeordnet ist, wobei jede Antenne zu der ihr vorgeordneten Antenne um 90° gedreht ist. Vorzugsweise sind dabei alle Antennen entlang des Umfangs in derselben Drehrichtung gedreht.

Vorzugsweise sind die Mittelpunkte aller Antennen auf einem gemeinsamen, gedachten Kreisumfang angeordnet, dessen Mittelpunkt mit dem Drehzentrum bzw. dem gemeinsamen Mittelpunkt der Antennen zusammenfällt. Die Antennenmittelpunkte können somit vorzugsweise denselben radialen Abstand zum gemeinsamen Mittelpunkt aufweisen.

In einer vorteilhaften Weiterbildung der Erfindung kann vorgesehen sein, dass die Antennen, insbesondere die nachfolgend noch genannten planaren Antennen, co-polarisiert sind. Unter einer Co-Polarisation ist zu verstehen, dass beispielsweise alle Antennen entweder rechtszirkular polarisiert, linkszirkular polarisiert, linear vertikal polarisiert oder linear horizontal polarisiert sind.

Die Erfinder haben im Rahmen der vorgeschlagenen Antennenanordnung überraschend erkannt, dass eine Co-Polarisation gegenüber einer ansonsten üblichen Kreuzpolarisation vorteilhaft sein kann. In der Regel wird eine Kreuzpolarisation gewählt, um das Übersprechen von Sende- zu Empfangsantennen zu reduzieren. Wenn nun allerdings die Empfangsantennen den Sendeantennen vergleichsweise dicht benachbart sind (wenn der Abstand beispielsweise kleiner oder gleich groß ist wie eine halbe Freiraumwellenlänge), liegen die Empfangsantennen im Nahfeld der Sendeantennen. Im Nahfeld ist die elektromagnetische Welle noch nicht transversal elektromagnetisch, so dass im Nahfeld auch noch keine ausgebildete zirkulare Polarisation vorliegen kann. Insofern würde die Kreuzpolarisation nicht zu einer Verbesserung der Isolation der Antennen führen. Jedoch kann die Co-Polarisation zu einer verbesserten Isolation gegenüber Reflexionskomponenten führen. Bei einer einfachen Reflexion, z. B. an einer elektrisch leitfähigen Oberfläche, ändert sich für eine zirkular polarisierte elektromagnetische Welle deren Drehrichtung. Sind nun Sende- und Empfangsantennen zueinander co-polarisiert, so ist eine an den Empfangsantennen eintreffende einfache Reflexionskomponente (zum Beispiel durch eine einfache Reflexion am gegenüberliegenden Kommunikationspartner) in Bezug auf die Empfangsantennen kreuzpolarisiert, was den unerwünschten Empfang der Reflexionskomponente erheblich reduziert und damit die Empfangsantennen gegenüber den Sendeantennen besser isoliert in Bezug auf Ausbreitungspfade mit einer einfachen oder ungeraden Anzahl von Reflexionsstellen.

Insbesondere kann die Unterdrückung des Empfangs solcher Reflexionskomponenten bei einem kontaktlosen Datenstecker bzw. bei einem kontaktlosen Verbinder relevant sein. Ein solcher kontaktloser Verbinder kann zwei der hier beanspruchten Transceiveranordnungen umfassen, welche sich dicht gegenüberliegen und z. B. weniger als 10 cm (oder auch weniger als 5 cm) beabstandet sind. Zum Beispiel können die Reflexionskomponenten aufgrund der kurzen Entfernung und der zur Entfernung relativ großen lateralen Ausdehnung von Leiterplatten der Transceiveranordnungen, auf welche die Sende- und Empfangsantennen aufgebracht sind, bei einem kontaktlosen Verbinder amplitudenstark sein, so dass es vorteilhaft ist, deren unerwünschten Empfang zu unterdrücken.

Es kann vorgesehen sein, dass die Sendeantennen und/oder Empfangsantennen als Richtantennen ausgebildet sind, deren Hauptabstrahlrichtungen in dieselbe Raumrichtung ausgerichtet sind, vorzugsweise parallel ausgerichtet sind. In einer Weiterbildung der Erfindung kann insbesondere vorgesehen sein, dass die Antennen als planare Antennen ausgebildet sind, deren Hauptflächen parallel zu der bereits genannten Basisfläche ausgerichtet sind, vorzugsweise parallel zu einer Seitenfläche einer elektrischen Leiterplatte, mit denen sie elektrisch und mechanisch verbunden sind.

In einer vorteilhaften Weiterbildung kann vorgesehen sein, dass die Hauptflächen der planaren Antennen eine längliche Geometrie aufweisen, vorzugsweise eine rechteckige oder elliptische Geometrie.

Auch eine dreieckige Geometrie (selbst ein gleichseitiges, also nicht längliches Dreieck) kann vorgesehen sein. Außerdem können auch Geometrien mit gezielt eingebrachten Asymmetrien vorgesehen sein, wie abgeschrägte Ecken, Ausnehmungen oder Schlitze, wobei derartige Asymmetrien auch in geometrischen Grundformen vorgesehen sein können, die keine längliche Gestaltung aufweisen.

In einer Weiterbildung der Erfindung kann vorgesehen sein, dass jede der planaren Antennen genau einen Einspeisepunkt aufweist.

Vorzugsweise können die Antennen zirkular polarisiert sein, insbesondere wenn die Antennen als planare Antennen ausgebildet sind, und ganz besonders dann, wenn die planaren Antennen jeweils nur genau einen Einspeisepunkt aufweisen. Die geometrische Form der Antenne und etwaige in die geometrische Form eingebrachte Asymmetrien können dementsprechend gestaltet sein.

Durch die zirkulare Polarisation, was bedeutet, dass sich die Vektoren von elektrischer und magnetischer Feldstärke der zu übertragenden elektromagnetischen Welle kontinuierlich drehen, kann eine Unabhängigkeit der Signalübertragungsstärke vom Rotationswinkel der Kommunikationspartner, z. B. zweier Transceiveranordnungen, in einem Abstand von beispielsweise weniger als 10 cm eines kontaktlosen elektrischen Verbinderss, zueinander erreicht werden.

Gemäß einer Weiterbildung der Erfindung kann vorgesehen sein, dass jede der planaren Antennen so gestaltet ist, dass deren Hauptfläche eine endliche, von Null verschiedene Anzahl von Symmetrieachsen aufweist, vorzugsweise genau zwei Symmetrieachsen oder genau drei Symmetrieachsen.

Insbesondere kann vorgesehen sein, dass die Antenne eine von einem Kreis verschiedene Geometrie aufweist.

Gemäß einer Weiterbildung der Erfindung kann vorgesehen sein, dass die planaren Antennen jeweils einen Orientierungswinkel zwischen einer Hauptsymmetrieachse, bei der es sich um die Längste der Symmetrieachsen der entsprechenden planaren Antenne handelt (insbesondere eine in Längsrichtung der Hauptfläche ausgerichtete oder diagonal auf der Hauptfläche ausgerichtete Symmetrieachse), und einer Geraden, die zwischen dem geometrischen Schwerpunkt der entsprechenden planaren Antenne und dem gemeinsamen Mittelpunkt der Antennen verläuft, ausbilden, und wobei die planaren Antennen derart zueinander ausgerichtet sind, dass die Orientierungswinkel aller planaren Antennen zumindest im Wesentlich identisch sind, vorzugsweise identisch sind.

Der Orientierungswinkel aller Antennen kann beispielsweise 40° bis 50° betragen, , vorzugsweise 43° bis 47°, besonders bevorzugt im Wesentlichen 45° oder genau 45°.

An dieser Stelle sei erwähnt, dass sich zwischen der Hauptsymmetrieachse und der vorstehend definierten Geraden einer jeweiligen Antenne im Grunde zwei voneinander verschiedene Winkel ausbilden, wenn der Orientierungswinkel nicht exakt 45° beträgt (ein stumpfer Winkel, also größer als 90°, und ein spitzer Winkel, also kleiner als 90°). In diesem Fall ist bei der Bestimmung des "Orientierungswinkels" für alle Antennen stets dasselbe Auswahlkriterium zu verwenden, also beispielsweise dahingehend, dass es sich bei dem Orientierungswinkel bei allen Antennen um denjenigen Winkel handelt, der entlang dem Uhrzeigersinn (oder alternativ entgegen dem Uhrzeigersinn), ausgehend von der Geraden zwischen der Geraden und der Hauptsymmetrieachse eingeschlossen wird. Ausgangspunkt (also z. B. die Gerade oder die Hauptsymmetrieachse) und Drehrichtung (also z. B. im Uhrzeigersinn oder entgegen dem Uhrzeigersinn) sollten bei allen Antennen gleich gewählt werden, um deren jeweiligen Orientierungswinkel festzulegen. Eben dieser Orientierungswinkel ist dann vorzugsweise bei allen Antennen identisch oder zumindest im Wesentlichen identisch. Der "Uhrzeigersinn" ist dabei in Bezug auf den gemeinsamen Mittelpunkt der Antennen zu verstehen.

Es kann vorgesehen sein, dass die Hauptsymmetrieachsen der Sendeantennen und der Empfangsantennen orthogonal zueinander verlaufen. Vorzugsweise sind die einzelnen Antennen derart angeordnet, dass sich die Sendeantennen und die Empfangsantennen mit jeweils einer schmalen Seite und einer langen Seite gegenüberliegen.

In einer Ausgestaltung der Erfindung kann vorgesehen sein, dass die Antennen einen jeweiligen außermittig versetzten Einspeisepunkt aufweisen, wobei der jeweilige außermittige Versatz (Abstand zum Mittelpunkt und/oder Position auf der Hauptfläche) bei allen Antennen identisch ist.

Durch den außermittig versetzten Einspeisepunkt kann eine Impedanzanpassung ermöglicht werden. Vorzugsweise ist der Einspeisepunkt derart gewählt, dass die Eingangsimpedanz 50 Ohm beträgt.

Der Einspeisepunkt einer jeweiligen Antenne kann vorzugsweise auf deren Hauptsymmetrieachse angeordnet sein. Grundsätzlich kann allerdings eine beliebige Anordnung des Einspeisepunktes auf der Hauptfläche der jeweiligen Antenne vorgesehen sein, insbesondere auch eine Position des Einspeisepunktes auf einer Geraden, die auf der Hauptfläche und durch den Mittelpunkt bzw. Schwerpunkt der Hauptfläche verläuft, und die einen Winkel von 45° zu der Hauptsymmetrieachse ausbildet.

In einer Weiterbildung der Erfindung kann vorgesehen sein, dass mit jeder der planaren Antennen eine jeweilige Speiseleitung kapazitiv gekoppelt ist. Die elektromagnetische Welle kann also von einer jeweiligen Speiseleitung in Nahfeldkopplung (vorzugsweise vornehmlich kapazitiv) in die Sendeantennen eingekoppelt und in Nahfeldkopplung (vorzugsweise vornehmlich kapazitiv) aus den Empfangsantennen ausgekoppelt werden. Die Speiseleitung kann insbesondere innerhalb der die Basisfläche ausbildenden elektrische Baugruppe, insbesondere einer Leiterplatte, aufgenommen sein.

Zur Ausbildung einer optionalen zirkularen Polarisation jeder einzelnen Sende- und/oder Empfangsantenne, kann die der jeweiligen Antenne zugeordnete Speiseleitung unter einem Winkel von im Wesentlichen 45° zur Hauptsymmetrieachse der Hauptfläche der jeweiligen Antenne angeordnet sein und kapazitiv mit der jeweiligen Antenne gekoppelt sein.

Eine auf elektromagnetischer Nahfeldkopplung basierende, vorzugsweise vornehmlich kapazitive Ein- und Ausspeisung der elektromagnetischen Welle ist insbesondere vorteilhaft, um den Einspeisepunkt besonders flexibel vorzugeben.

Grundsätzlich kann eine Ein- und Auskopplung allerdings auch auf andere Weise erfolgen.

Beispielsweise kann vorgesehen sein, dass die elektromagnetische Welle von einer unmittelbar in die Antenne (insbesondere in deren Hauptfläche) mündenden Speiseleitung eingekoppelt wird (z. B. eine Mikrostreifenleitung einer Leiterplatte). Es kann also eine direkte galvanische Ein- und Ausspeisung auf gleicher Ebene zur jeweiligen Antenne vorgesehen sein.

Es kann auch vorgesehen sein, dass die elektromagnetische Welle von einer unmittelbar in die Antenne (insbesondere in deren Hauptfläche) mündenden Durchkontaktierung ("Via") eingekoppelt wird, die mittelbar oder unmittelbar mit einer auf einer anderen Höhenlage verlaufenden Speiseleitung verbunden ist. Ein Vorteil der oben beschriebenen kapazitiven Kopplung gegenüber der Kopplung über eine Durchkontaktierung kann jedoch gerade das Entfallen der Notwendigkeit dieser Durchkontaktierung sein. Allgemein ist der Ätzprozess bei der Leiterplattenherstellung genauer als die Positionierung der Durchkontaktierungen. Über die kapazitive Kopplung kann daher das Problem der Platzierungstoleranz der Durchkontierung umgangen werden. Bei einem fertigungsbedingten Versatz der Durchkontaktierungen kann die Drehsymmetrie der Antennenanordnung gestört werden, die allerdings maßgeblich dafür sein kann, dass das Übersprechen der ersten Sendeantenne zu den Empfangsantennen betragsmäßig dem Übersprechen der zweiten Sendeantenne zu den Empfangsanrennen entspricht. Entfällt also das Problem der Durchkontaktierung, so kann die Drehsymmetrie der Antennenanordnung besser gewahrt werden. Letztlich kann dies die Isolation zwischen den Sende- und Empfangsantennen verbessern.

Außerdem kann vorgesehen sein, dass die elektromagnetische Welle mittels zumindest einer Zwischenantenne eingekoppelt wird, die parallel zu der Hauptfläche und der Speiseleitung angeordnet ist und die sich in einer Ebene zwischen der Hauptfläche und der Speiseleitung befindet. Es kann damit eine gestapelte Anordnung mit einer oder mehreren Zwischenantennen vorgesehen sein, beispielsweise eine gestapelte Anordnung mehrerer als Patchantennen und/oder Schlitzantennen ausgebildeten Zwischenantennen in einer gemeinsamen Leiterplatte. Durch die gestapelte Antennenanordnung kann die Übertragungsbandbreite optional weiter erhöht werden.

Grundsätzlich kann jede Antennenstruktur verwendbar sein, die zirkular polarisierte elektromagnetische Wellen zu erzeugen oder zu empfangen vermag. Auch eine lineare Polarisation ist aber grundsätzlich möglich, insbesondere wenn von einer gegenseitigen Verdrehung der Kommunikationspartner nicht auszugehen ist.

Die Speiseleitung kann sich in Richtung auf den Einspeisepunkt verbreitern, um eine Impedanzanpassung zu ermöglichen.

Zur Realisierung einer noch vorteilhafteren Abstrahlcharakteristik, insbesondere einer gerichteten Abstrahlung der elektromagnetischen Welle entlang einer Hauptabstrahlrichtung kann vorgesehen sein, dass auf der von der gewünschten Hauptabstrahlrichtung abgewandten Seite der Antenne, also "unterhalb" der Antenne eine metallische bzw. elektrisch leitfähige Referenzelektrodenstruktur bzw. Masseplatte ausgebildet ist. Die Masseplatte kann beispielsweise als metallisierte Unterseite einer Leiterplatte ausgebildet sein, auf deren Oberseite die Hauptflächen der Antennen gebildet sind.

In einer vorteilhaften Weiterbildung der Erfindung kann vorgesehen sein, dass die Antennen als Patchantennen oder als Schlitzantennen ausgebildet sind.

Vorzugsweise sind die Antennen als Patchantennen ausgebildet. Die Patchantennen können insbesondere als metallisierte Flächen auf oder in einer Leiterplatte ausgebildet sein. Die Schlitzantennen können hingegen in komplementärer Weise als entsprechende Ausnehmungen metallisierter Bereiche einer Leiterplatte ausgebildet sein.

Die Verwendung von Patchantennen oder Schlitzantennen ist lediglich eine vorteilhafte Möglichkeit zur Realisierung der erfindungsgemäßen Antennenanordnung. Auch die Verwendung von beispielsweise Hornantennen ist möglich.

Vorzugsweise werden die Patchantennen oder Schlitzantennen durch Leiterplattenfertigungsprozesse in einer additiven und/oder subtraktiven Schichttechnologie hergestellt. Die einzelnen Antennen können aber beispielsweise auch durch Tiefzieh- oder Stanzbiegeprozesse separat gefertigt werden.

In einer Weiterbildung der Erfindung kann vorgesehen sein, dass die jeweiligen Hauptflächen der Antennen eine elliptische Geometrie aufweisen. Ebenfalls kann eine rechteckige Geometrie (mit unterschiedlichen Seitenlängen oder quadratisch) vorgesehen sein, beispielsweise mit genau einem Paar von sich diagonal gegenüberliegenden, abgeschrägten Ecken, insbesondere bei einer quadratischen Geometrie.

Grundsätzlich können auch noch weitere Geometrien vorgesehen sein, beispielsweise eine dreieckige Geometrie, eine kreisförmige Geometrie (insbesondere mit ausgestanzten bzw. ausgesparten Randbereichen, beispielsweise quadratisch ausgestanzten Randbereichen) oder sonstige Geometrien.

Bevorzugt ist allerdings die elliptische Geometrie, da hierdurch eine besonders vorteilhafte Abstrahlcharakteristik erreichbar sein kann. Insbesondere kann durch die elliptische Geometrie eine vorzugsweise vollständig zirkular polarisierte elektromagnetische Welle abgestrahlt werden mit einer Axial Ratio von idealerweise 1,0. Dabei ist ein besonderer Vorteil der elliptischen Geometrie einerseits der - verglichen mit anderen Geometrien - geringe Flächenbedarf und die Möglichkeit, mit nur einem einzigen Einspeisepunkt eine zirkulare Polarisation zu erzeugen.

Linear polarisierte Anteile können durch die elliptische Geometrie bestmöglich vermieden werden, weshalb die elliptische Geometrie auch die energieeffizienteste Antennenanordnung ermöglichen kann.

Im Falle einer Patchantenne können die metallisierten Flächen die entsprechende Geometrie aufweisen (elliptisch, rechteckig, etc.). Im Falle einer Schlitzantenne kann die entsprechende Ausnehmung in der metallisierten Fläche die genannten Geometrien aufweisen.

In einer Weiterbildung kann auch vorgesehen sein, dass die Antennenanordnung eine Schirmungsanordnung aufweist, die um die Sendeantennen und die Empfangsantennen herum angeordnet ist.

Vorzugsweise bildet die Schirmungsanordnung einen die Antennen im Wesentlichen hülsenförmig einhüllenden, orthogonal zu der Basisfläche verlaufenden Schirmungsmantel aus. Die Schirmungsanordnung kann insbesondere aus einzelnen Durchkontaktierungen ausgebildet sein, die sich durch eine die Basisfläche ausbildende elektrische Baugruppe (z. B. eine Leiterplatte) hindurch erstrecken, vorzugsweise in gleichmäßiger Anordnung, besonders bevorzugt in zwei oder mehr Reihen und ganz besonders bevorzugt mit denselben Abständen zueinander.

Vorzugsweise ist die Schirmungsanordnung zu allen Antennen gleichermaßen symmetrisch angeordnet.

Dadurch, dass die Antennenanordnung die genannte Schirmungsanordnung aufweist, kann die Antennenanordnung gegenüber der Umgebung abgeschirmt und außerdem die elektromagnetische Isolierung zusätzlich erhöht werden. Es kann mittels der Schirmungsanordnung vorzugsweise eine quasi-koaxiale Struktur für die Ein- bzw. Ausspeisepfade realisierbar sein.

Vorzugsweise ist die Antennenanordnung auf einer elektrischen Leiterplatte angeordnet. Das Substratmaterial der Leiterplatte kann beispielsweise der Verbundwerkstoff FR-4 sein (Verbundwerkstoff aus Glasfasern in Epoxidharz), um eine besonders kostengünstige Antennenanordnung bereitzustellen. Alternativ kann das Substratmaterial auch als Verbund aus Keramikpartikeln (Teflon) und Glasfasern in Epoxidharz ausgebildet sein, um dielektrische Verluste zu minimieren.

Anwendungsbedingt kann es vorkommen, dass der zwischen zwei Transceiveranordnungen etablierte Übertragungskanal von Verzerrungen betroffen ist, die durch Reflexionen der das Datensignal transportierenden elektromagnetischen Welle verursacht werden. Reflexionen können an allen Objekten vorkommen, auf welche die elektromagnetische Welle bei ihrer Übertragung trifft. Die Reflexionen führen dazu, dass das Nutzsignal von der einen zur anderen Transceiveranordnung nicht nur auf direktem Wege über die sogenannte Sichtverbindungskomponente ("Line-Of-Sight") übertragen wird, sondern über eine Mehrzahl an Ausbreitungswegen, welche von den Reflexionskomponenten der Übertragung gebildet werden. Man spricht dann von Mehrwegeausbreitung bzw. von einem Mehrwegekanal. Infolge der Mehrwegeausbreitung interferiert die Sichtverbindungskomponente an den Empfangsantennen der gegenüberliegenden Transceiveranordnung mit den Reflexionskomponenten, so dass das Empfangssignal in Betrag und Phase verzerrt sein kann. Dadurch wird es für den Empfänger schwieriger, das Empfangssignal fehlerfrei zu detektieren. Neben den Verzerrungen wirft die Mehrwegeausbreitung auch das Problem der destruktiven Interferenz am Empfänger auf, denn die Sichtverbindungskomponente kann sich mit einer ihr gegenüber um 180° verschobenen Reflexionskomponente auslöschen und somit beträchtlich an Leistung verlieren.

Insbesondere wenn sich die Transceiveranordnungen, wie beispielsweise bei dem nachfolgend noch erläuterten kontaktlosen elektrischen Verbinder der Fall, dicht gegenüberstehen (z.B. weniger als 10 cm beabstandet sind), kann es vorkommen, dass die Reflexion an den Basisflächen der elektrischen Baugruppe (z. B. Leiterplatten) erfolgt, auf denen die Antennen befestigt sind, denn derartige Baugruppen stellen mitunter gute Reflektoren dar. Bei der Übertragung von der ersten zur zweiten Transceiveranordnung kann das Signal daher über die Sichtverbindungskomponente zur zweiten Transceiveranordnung gelangen, wo es in Richtung der ersten Transceiveranordnung reflektiert wird. Wieder zurück an der ersten Transceiveranordnung, kann das Signal dort abermals reflektiert und zu den Empfangsantennen der zweiten Transceiveranordnung zurückgeworfen werden, wo es schließlich mit der Sichtverbindungskomponente interferiert.

Optional kann vorgesehen sein, die Effekte der Mehrwegeausbreitung weitestgehend zu minimieren, um die Signalübertragungsqualität zu verbessern. Diesbezüglich kann eine Signalverarbeitungskomponente der Transceiveranordnung vorgesehen sein, insbesondere eine digitale Signalverarbeitungskomponente, zur Entzerrung oder Vorverzerrung.

In einer vorteilhaften Weiterbildung der Erfindung kann allerdings insbesondere vorgesehen sein, dass die Antennenanordnung eine um die Antennen herum angeordnete Dämpfungsanordnung aufweist. Vorzugsweise umgibt die Dämpfungsanordnung die Antennen in radialer Richtung, beispielsweise in symmetrischer Anordnung um die Antennen.

Es hat sich gezeigt, dass sich mittels der Dämpfungsanordnung auf vorteilhafte Weise Kanalverzerrungen reduzieren lassen, ohne dass der Einsatz der vorstehend genannten Signalverarbeitungskomponente unbedingt erforderlich ist. Somit kann bei der Signalübertragung zusätzlich erheblich Energie eingespart werden, welche andernfalls zur Versorgung der digitalen Signalverarbeitungskomponente erforderlich wäre. Energiesparsamkeit kann vor allem bei einem kontaktlosen Datenstecker bzw. einem kontaktlosen Verbinder vorteilhaft sein, da dieser in Konkurrenz zu kontaktmachenden Datensteckern steht, welche oft passiv sind und somit oft keinen Energiebedarf haben. Außerdem kann Energiesparsamkeit die Entwärmung eines kontaktlosen Verbinderss und damit dessen Integration in Datenübertragungssysteme erheblich erleichtern.

Es kommen vorzugsweise Hochfrequenz-Dämpfungsmaterialien (auch "RF-Absorber" genannt) zum Einsatz. Dieses Dämpfungsmaterial, von dem in der Regel in Form von Dämpfungsmatten Gebrauch gemacht wird, wird auf zumindest einem, vorzugsweise beiden Kommunikationspartnern, insbesondere um deren Antennen herum, montiert. Die Dämpfungsanordnung kann sicherstellen, dass nur wenig bis keine Strahlung an der Oberfläche der elektrischen Baugruppe bzw. Leiterplatte reflektiert wird.

Die Dämpfungsanordnung kann zumindest eine erste Dämpfungseinheit mit einer Zugangsöffnung aufweisen, wobei die Antennen gemeinsam innerhalb der Zugangsöffnung angeordnet sind. Die Mittelachse der Zugangsöffnung kann vorzugsweise entlang einer Hauptabstrahlrichtung der Antennenanordnung und/oder durch den gemeinsamen Mittelpunkt der Antennen verlaufen.

Vorzugsweise erstreckt sich die Dämpfungsanordnung bzw. die Dämpfungseinheit nicht zwischen die Antennen der Antennenanordnung. Zwischen den Antennen ist vorzugsweise kein Dämpfungsmaterial vorgesehen.

Vorzugsweise ist die Dämpfungsanordnung auf der Basisfläche angeordnet, insbesondere auf einer Seitenfläche einer Leiterplatte, auf der auch die Antennen ausgebildet sind. Die Dämpfungsanordnung oder deren Komponenten (z. B. die Dämpfungseinheiten) können beispielsweise auf der Basisfläche stoffschlüssig befestigt sein, insbesondere aufgeklebt sein, wobei ergänzend oder alternativ auch eine kraftschlüssige und/oder formschlüssige Befestigung vorgesehen sein kann.

Die Dämpfungsanordnung kann auch von der Basisfläche axial beabstandet oder zumindest abschnittsweise in der Basisfläche eingebettet sein, also beispielsweise innerhalb einer Leiterplatte ausgebildet sein.

An dieser Stelle sei erwähnt, dass die Definition, wonach die Dämpfungsanordnung um die Antennen herum angeordnet ist, vorzugsweise auf eine Draufsicht auf die Basisfläche bzw. auf die Antennen zu verstehen ist, so dass die Dämpfungsanordnung die Antennen in der Draufsicht radial bzw. ringförmig umgibt. Es ist dabei nicht unbedingt erforderlich, dass die Dämpfungsanordnung die Antennen auch in axialer Richtung bzw. seitlich verdeckt.

In einer Weiterbildung kann vorgesehen sein, dass die Dämpfungsanordnung eine zweite Dämpfungseinheit mit einer Zugangsöffnung aufweist, innerhalb der die besagten Antennen gemeinsam angeordnet sind. Insbesondere kann vorgesehen sein, dass die erste Dämpfungseinheit und die zweite Dämpfungseinheit konzentrisch angeordnet sind.

Vorzugsweise unterscheiden sich die erste Dämpfungseinheit und die zweite Dämpfungseinheit geometrisch und/oder durch deren jeweilige Materialzusammensetzung / strukturelle Zusammensetzung.

Die Dämpfungsanordnung oder Komponenten der Dämpfungsanordnung, wie beispielsweise die erste Dämpfungseinheit und/oder die zweite Dämpfungseinheit, können eine vornehmlich flache Geometrie aufweisen, vorzugsweise plattenförmig, insbesondere als so genannte "Dämpfungsmatten" ("Absorber Sheets") ausgebildet sein. Es kann im Grunde aber eine beliebige Ausgestaltung vorgesehen sein, so beispielsweise auch eine pyramidenförmige Anordnung bzw. Ausgestaltung der Dämpfungsanordnung oder deren Komponenten.

Es kann vorgesehen sein, dass die Zugangsöffnung der ersten Dämpfungseinheit und/oder der zweiten Dämpfungseinheit kreisförmig oder quadratisch ausgebildet ist. Grundsätzlich kann aber eine beliebige polygonale oder sonstige geometrische Form für die Zugangsöffnung vorgesehen sein. Eine kreisförmige Zugangsöffnung ist in der Regel zu bevorzugen, da durch die Rotationssymmetrie ein womöglich störender Einfluss auf eine optionale zirkulare Polarisation gemindert werden kann.

Es kann vorgesehen sein, dass der Umfang der Zugangsöffnung der ersten Dämpfungseinheit und/oder der zweiten Dämpfungseinheit sowie eine Erstreckung der ersten Dämpfungseinheit und/oder der zweiten Dämpfungseinheit entlang der Mittelachse so ausgebildet sind, dass eine Antennenhauptkeule einer der Antennen in Hauptabstrahlrichtung von der Dämpfungsanordnung (in einer Draufsicht auf die Antennen bzw. die Basisfläche / Leiterplatte) nicht verdeckt wird.

Die Zugangsöffnung(en) zu den Antennen ist/sind vorzugsweise kleinstmöglich ausgebildet, ohne die Antennenhauptkeule zu schneiden. Eine kleine Öffnung im Dämpfungsmaterial hat den Vorteil, dass Reflexionen an der Leiterplatte, auf der die Antennen vorzugsweise angeordnet sind, gut unterdrückt werden.

In einer Weiterbildung der Erfindung kann vorgesehen sein, dass eine Quererstreckung der Zugangsöffnung (z. B. ein Radius einer kreisförmigen Zugangsöffnung oder eine Diagonale einer quadratischen Zugangsöffnung) der ersten Dämpfungseinheit und/oder der zweiten Dämpfungseinheit höchstens 2,0 Freiraumwellenlängen einer mit der Antennenanordnung zu übertragenden elektromagnetischen Welle beträgt.

In einer vorteilhaften Weiterbildung kann vorgesehen sein, dass die erste Dämpfungseinheit innerhalb der Zugangsöffnung der zweiten Dämpfungseinheit angeordnet ist.

Die erste Dämpfungseinheit kann dabei vorzugsweise im Wesentlichen passgenau, besonders bevorzugt passgenau, innerhalb der zweiten Dämpfungsanordnung angeordnet sein. Vorzugsweise verbleibt daher kein Luft- oder sonstiger Spalt zwischen den beiden Dämpfungseinheiten.

Auf diese Weise können grundsätzlich beliebig viele ineinander angeordnete Dämpfungseinheiten vorgesehen sein, also beispielsweise eine dritte Dämpfungseinheit, in der die zweite Dämpfungseinheit zusammen mit der ersten Dämpfungseinheit angeordnet ist, und so weiter.

In einer Weiterbildung der Erfindung kann vorgesehen sein, dass die zweite Dämpfungseinheit eine größere Erstreckung entlang der Mittelachse aufweist als die erste Dämpfungseinheit. Die zweite Dämpfungseinheit ist also vorzugsweise höher als die erste Dämpfungseinheit. Dies ist insbesondere dann vorteilhaft, wenn die erste Dämpfungseinheit innerhalb der zweiten Dämpfungseinheit angeordnet ist, da hierdurch eine Gesamtstruktur bereitgestellt werden kann, die den Antennenkeulen der Sendeantennengruppe und der Empfangsantennengruppe ausreichend Spielraum für eine Aufweitung in Hauptstrahlrichtung bietet, ohne dass die Antennenkeulen eine der Dämpfungseinheiten in der Draufsicht schneiden, wobei die Dämpfungseinheiten gleichzeitig eine gute Abdeckung und damit Dämpfung bereitzustellen vermögen.

Es kann vorgesehen sein, dass die erste Dämpfungseinheit und/oder die zweite Dämpfungseinheit einen verlustbasierenden Absorber (auch als "breitbandiger Absorber" bezeichnet) und/oder einen resonanzbasierenden Absorber (auch als "schmalbandiger Absorber" bezeichnet) aufweist.

Bei verlustbasierten Materialien kann die Reflexionsdämpfung durch dielektrische und/oder magnetische Verluste innerhalb des Dämpfungsmaterials erreicht werden. Solche Dämpfungsmaterialien sind beispielsweise Schaumstoffe, wie aus Polyurethan, oder Elastomere, wie Silikon oder Nitril-Polymere, die mit verlustbehafteten Materialien, wie zum Beispiel Kohlenstoffpulver oder Ferritpulver, versehen sein können.

Der verlustbasierende Absorber kann somit ein dielektrisches Trägermaterial aufweisen, insbesondere aus einem Schaumstoff oder einem Elastomer, das mit einem granularen, elektrisch leitfähigen Fremdmaterial versehen ist, insbesondere einem Kohlenstoffpulver oder Ferritpulver.

Optional kann der verlustbasierende Absorber einen in axialer Richtung verlaufenden, schichtweisen oder kontinuierlichen Impedanzgradienten ausbilden. Durch einen mehrlagigen Aufbau oder durch Änderung der dielektrischen und/oder magnetischen Eigenschaften des Materials in die Tiefe des Materials hinein, kann ein Impedanzgradient eingestellt werden, welcher den Freiraumwellenwiderstand (von ca. 377 Ohm) kontinuierlich verringert. Aufgrund dieser Impedanzanpassung wird eine auf das Material einfallende elektromagnetische Welle nicht am Übergang Luft-zu-Absorber reflektiert. Stattdessen wird sie in den Absorber hineingeführt und mit fortschreitendem Eindringen immer stärker infolge dielektrischer oder magnetischer Verluste des Absorbers bedämpft.

Auf dem Konzept der graduellen Änderung des Feldwellenwiderstands beruhen auch pyramidenförmigen RF-Absorber, die grundsätzlich auch vorgesehen sein können.

Der resonanzbasierende Absorber kann ein dielektrisches Trägermaterial aufweisen, insbesondere aus einem Schaumstoff oder einem Elastomer, auf dessen von der Hauptabstrahlrichtung der Antennen abgewandten Seite eine elektrisch leitfähige Reflexionsfläche ausgebildet sein kann, insbesondere eine metallische Beschichtung oder eine Metallfolie.

Bei resonanzbasierten Dämpfungsmaterialien, die ebenfalls beispielsweise auf Silikonen, Nitrilen oder Polyurethanen basieren, kann an einer unter dem Dämpfungsmaterial angeordneten Metallisierungsfläche eine zweite Reflexionskomponente erzeugt werden, welche einer ersten Reflexionskomponente, die an der Grenzfläche Luft-zu-Dämpfungsmaterial entsteht, um 180° in der Phase verschoben ist. Die erste Reflexionskomponente kann sich dann mit der zweiten Reflexionskomponente gegenseitig auslöschen.

In einer besonders vorteilhaften Weiterbildung der Erfindung kann vorgesehen sein, dass die zweite Dämpfungseinheit einen verlustbasierenden Absorber und die erste Dämpfungseinheit einen resonanzbasierenden Absorber aufweist. Diese Kombination ist insbesondere dann vorteilhaft, wenn die erste Dämpfungseinheit innerhalb der zweiten Dämpfungseinheit angeordnet ist, und insbesondere, wenn die zweite Dämpfungseinheit eine größere axiale Erstreckung aufweist als die erste Dämpfungseinheit. Gerade bei einer Trägerfrequenz von mehr als 20 GHz, insbesondere von mehr als 50 GHz, können sehr dünne resonanzbasierte Dämpfungsmaterialien realisiert werden. Die sich daraus ergebende geringe axiale Erstreckung einer mit einem resonanzbasierten Dämpfungsmaterial realisierten ersten Dämpfungseinheit kann sich wiederum günstig auf eine optionale zirkulare Polarisation der Antennen auswirken, da dann die erste Dämpfungseinheit wenig ins das Strahlungsfeld der Antennen eingreift.

Zum Beispiel kann in unmittelbarer Nähe in einem ersten Ring um die Antennen herum ein dünnes Dämpfungsmaterial bzw. eine dünne erste Dämpfungseinheit (z. B. 0.5 mm bis 2 mm stark) angeordnet sein, welches aufgrund ihrer dünnen Ausführung nur wenig die Antennencharakteristik (wie den Antennengewinn und die Polarisation der Antennen) beeinflusst. Dies kann beispielsweise durch ein resonanzbasiertes Dämpfungsmaterial oder ein dünnes elastomerbasiertes, breitbandiges Dämpfungsmaterial ermöglicht werden. Das resonanzbasierte Dämpfungsmaterial hat den Vorteil kostengünstiger und dünn zu sein. Das breitbandige Material hat neben seiner größeren Absorptionsbandbreite den Vorteil auch nicht orthogonal einfallende elektromagnetische Strahlung gut absorbieren zu können. In einem zweiten Ring um die Antennen herum kann ein zweites Dämpfungsmaterial bzw. die zweite Dämpfungseinheit angeordnet sein, welche dicker (z. B. > 2 mm) und kostengünstig ist und auch nicht orthogonal einfallende elektromagnetische Strahlung gut absorbiert, wie beispielsweise bei einem breitbandigen Schaumstoffabsorber der Fall.

Es kann vorgesehen sein, dass ein Durchmesser oder eine Seitenlänge der Dämpfungsanordnung höchstens 6 Freiraumwellenlängen und mindestens 3 Freiraumwellenlängen einer mit der Antennenanordnung zu übertragenden elektromagnetischen Welle beträgt.

Die Erfindung betrifft auch eine Transceiveranordnung, aufweisend eine Antennenanordnung gemäß den vorstehenden und nachfolgenden Ausführungen sowie den Sendesignalpfad und den Empfangssignalpfad, wobei der asymmetrische Anschluss des ersten Balun mit dem Sendesignalpfad und der asymmetrische Anschluss des zweiten Balun mit dem Empfangssignalpfad verbunden ist. Der Sendesignalpfad weist eine Sendeeinheit und der Empfangssignalpfad eine Empfangseinheit auf, die Komponenten einer gemeinsamen Schaltungsanordnung sein können. Die Sendeeinheit ist mit den beiden Sendeantennen über den ersten Balun verbunden, um eine elektromagnetische Welle durch differenzielle Anregung der beiden Sendeantennen abzustrahlen. Die Empfangseinheit ist über den zweiten Balun mit den Empfangsantennen verbunden, um eine elektromagnetische Welle über die Empfangsantennen zu empfangen.

Vorzugsweise ist also der Single-Ended-Anschluss (also der Anschluss für die asymmetrische Signalübertragung) des ersten Balun an den HF-Ausgang der Sendeinheit bzw. des Senders und jeweils ein differentieller Anschluss (also ein Anschluss für die symmetrische Signalübertragung) des ersten Balun an die Sendeantennen angeschlossen. Vorzugsweise ist außerdem der Single-Ended-Anschluss des zweiten Balun an den HF-Eingang der Empfangseinheit bzw. des Empfängers und jeweils ein differentieller Anschluss des zweiten Balun an die Empfangsantennen angeschlossen.

Auf vorteilhafte Weise kann eine Transceiveranordnung mit einer Antennenanordnung bereitgestellt werden, die sich für die gleichzeitige bidirektionale Übertragung von Daten (Vollduplex) im gleichen Frequenzband ("Inband Full-Duplex") und unabhängig von der gegenseitigen Rotation bzw. Ausrichtung der Kommunikationspartner zueinander eignet. Beispielsweise eine Rotation bzw. Verdrehung der beiden Kommunikationspartner um den gemeinsamen Mittelpunkt der Antennen kann im Rahmen der Übertragung möglich sein, insbesondere wenn die beiden Kommunikationspartner zueinander konzentrisch angeordnet sind, so dass die Drehachsen mit dem gemeinsamen Mittelpunkt der Antennen und der Drehachse des jeweils anderen Kommunikationspartners zu einem gemeinsamen Drehsymmetriezentrum zusammenfallen. Dabei umfasst je ein Kommunikationspartner eine Transceiveranordnung gemäß der vorstehenden und nachstehenden Ausführungen.

Mittels der vorgeschlagenen Transceiveranordnung können Daten unabhängig von der Orientierung oder Ausrichtung zweier Kommunikationspartner bzw. einer ersten und einer zweiten Transceiveranordnung übertragen werden, bei gleichzeitig einfachem technischem Aufbau der Antennenanordnung. Die Erfindung kann vorteilhaft mit konventioneller Leiterplattentechnik umgesetzt werden, wobei grundsätzlich allerdings auch andere Techniken zur Herstellung möglich sind, beispielsweise unter Verwendung eines Hohlleiters.

Der Balun bzw. das Symmetrierglied kann vorzugsweise als 180° Hybridkoppler (auch als "Rat-Race"-Koppler oder Ringkoppler bekannt) ausgebildet sein. Alternativ kann aber auch eine andere Struktur vorgesehen sein, insbesondere ein Marchand-Balun. Auch andere Realisierungsformen sind allerdings möglich. Beispielsweise kann ein 90°-Hybridkoppler vorgesehen sein, an dessen zweitem Ausgangstor, welches gegenüber dem ersten Ausgangstor um 90° in der Phase verzögert ist, eine Leitung mit einer elektrischen Länge von 90° (also 1/4 der Freiraumwellenlänge der zu übertragenden elektromagnetischen Welle) angeschlossen ist. Ferner kann ein Wilkinson-Teiler vorgesehen sein, an dessen ersten Ausgang eine erste Antennenspeiseleitung angeschlossen ist, deren elektrische Länge um 180° länger ist als die elektrische Länge einer zweiten Antennenspeiseleitung, welche an einen zweiten Ausgang des Wilkinson-Teilers angeschlossen ist. Auch ein so genanntes "Magisches T" / "Magic Tee" kann vorgesehen sein.

In einer besonders vorteilhaften Weiterbildung der Erfindung kann vorgesehen sein, dass die Sendeeinheit und die Empfangseinheit ausgebildet sind, eine Inband-Vollduplex-Kommunikation zu ermöglichen. In einer anderen Ausbildung der vorliegenden Offenbarung kann es sich bei der Sendeeinheit und der Empfangseinheit um Komponenten eines Radar-Systems handeln.

Vorzugsweise ist die Sendeeinheit ausgebildet, ein Sendesignal mit einem ersten Trägerfrequenzband zu senden, wobei die Empfangseinheit ausgebildet ist, ein Empfangssignal mit einem zweiten Trägerfrequenzband zu empfangen, wobei sich das erste Trägerfrequenzband und das zweite Trägerfrequenzband zumindest teilweise spektral überlagern, vorzugsweise vollständig spektral überlagern, und wobei die Empfangseinheit ausgebildet ist, das Empfangssignal zu empfangen, während die Sendeeinheit das Sendesignal sendet.

In einer Ausgestaltung der Erfindung kann vorgesehen sein, dass die Empfangseinheit ausgebildet ist, eine inkohärente Demodulation durchzuführen. Die Empfangseinheit kann vorzugsweise einen Hüllkurvendemodulator zur Durchführung der inkohärenten Demodulation aufweisen.

Insbesondere wenn das Ziel verfolgt wird, eine hohe Datenrate bei der Signalübertragung zu erreichen, ist in der Regel ein kohärentes Übertragungsverfahren bevorzugt. Die Erfinder haben allerdings erkannt, dass sich vorliegend ein inkohärentes Demodulationsverfahren aufgrund eines deutlich verringerten Stromverbrauchs besser eignen kann. Um gleichzeitig eine hohe Datenrate beizubehalten, kann die vorstehend vorgeschlagene, aufgrund der hohen Dämpfungseigenschaften der erfindungsgemäßen Antennenanordnung vorteilhaft einsetzbare Inband-Vollduplex-Übertragung zum Einsatz kommen. Die hohen Dämpfungseigenschaften können dabei durch die erste und optional zusätzlich die zweite Dämpfungseinheit erreicht werden.

In einer Ausgestaltung der Erfindung kann außerdem vorgesehen sein, dass die Sendeeinheit einen freilaufenden, spannungsgesteuerten Oszillator zur Erzeugung einer Trägerfrequenz für die Signalübertragung aufweist.

Die Verwendung eines freilaufenden Oszillators kann zu einem einfachen, stromsparenden Aufbau der Transceiveranordnung führen. Insbesondere eine aufwändige, Bauraum und elektrische Leistung fordernde Phasenregelschleife kann entfallen. Entsprechend kann der Empfangssignalpfad der Transceiveranordnung ohne Oszillator auskommen, was abermals Strom und Bauraum einspart, insbesondere wenn der Empfangssignalpfad eine inkohärente Demodulation durchführt und über einen entsprechenden Einhüllenden-Demodulator verfügt.

Es kann vorgesehen sein, zur weiteren Vereinfachung der Transceiveranordnung eine nur zweistufige Zweiseitenband-Amplitudenmodulation zu verwenden. Insbesondere kann auf ein komplexes Modulationsverfahren, wie eine Quadratur-Amplituden-Modulation, verzichtet werden.

Vorzugsweise ist die maximale Sendeleistung der Sendeeinheit kleiner als 30 dBm, vorzugsweise kleiner als 27 dBm, besonders bevorzugt kleiner als 20 dBm, ganz besonders bevorzugt kleiner als 10 dBm, weiter bevorzugt kleiner als 2 dBm.

Eine Einstellung der Sendeleistung kann z. B. über eine Arbeitspunkteinstellung eines Sendesignalendstufenverstärkers des Sendesignalpfads vorgenommen werden.

Die Sendeeinheit der Transceiveranordnung kann eine erste Signalverarbeitungskomponente (genauer eine Sendesignalverarbeitungskomponente) umfassen. Diese Sendesignalverarbeitungskomponente kann Aufwärtsmischer umfassen, welcher eine Sendebasisbandsignal in einen Trägerfrequenzbereich umsetzt. Dabei kann ein Lokaloszillatorsignal für den Aufwärtsmischer durch eine Oszillatorschaltung der Sendesignalverarbeitungskomponente bereitgestellt werden. Ferner kann die Sendesignalverarbeitungskomponente einen Sendesignalendstufenverstärker umfassen, welcher an den Hochfrequenz-Ausgang (kurz HF-Ausgang) der Sendesignalverarbeitungskomponente angeschlossen ist. Optional kann die Sendesignalverarbeitungskomponente einen Sendefilter, z. B. einen Bandpassfilter umfassen, welcher zwischen den Ausgang des Sendesignalendstufenverstärkers und des HF-Ausgangs der Sendesignalverarbeitungskomponente geschaltet ist.

Die Empfangseinheit kann eine zweite Signalverarbeitungskomponente (genauer eine Empfangssignalverarbeitungskomponente) umfassen. Diese Empfangssignalverarbeitungskomponente kann an ihrem Hochfrequenz-Eingang (kurz HF-Eingang) ein Empfangsfilter umfassen, welches als Bandpassfilter realisiert sein kann. Ferner kann die Empfangssignalverarbeitungskomponente einen rauscharmen Vorstärker umfassen, welcher an den Hochfrequenz-Eingang der Empfangssignalverarbeitungskomponente angeschlossen sein kann. Z. B. ist der rauscharme Vorverstärker an den Ausgang des Empfangsfilters angeschlossen. Außerdem kann die Empfangssignalverarbeitungskomponente einen Abwärtsmischer umfassen, welcher das Empfangssignal von einem Trägerfrequenzbereich in das Basisband oder auf eine Zwischenfrequenz umsetzen kann. Dieser Abwärtsmischer kann z. B. als Einhüllenden-Demodulator realisiert sein oder kann von einer optionalen Lokaloszillatorschaltung der Empfangssignalverarbeitungskomponente mit einem Lokaloszillatorsignal versorgt werden.

In einem Ausführungsbeispiel umfasst weder die Sendesignalverarbeitungskomponente noch die Empfangssignalverarbeitungskomponente Vorrichtungen für eine digitale Signalverarbeitung, insbesondere keine Vorrichtungen zur Funkkanalschätzung, zur digitale Vorverzerrung des Sendesignals oder zur Entzerrung des Empfangssignals. Dies kann zu einer Stromeinsparung der Transceiveranordnung führen.

Insbesondere kann für die Datenübertragung eine Trägerfrequenz von 10 GHz oder mehr vorgesehen sein, vorzugsweise von 30 GHz oder mehr, besonders bevorzugt von 60 GHz oder mehr. Vorzugsweise kann der spannungsgesteuerte Oszillator der Sendeeinheit ausgebildet sein, eine Trägerschwingung bei den vorstehend genannten Trägerfrequenzen zu erzeugen.

In einem Ausführungsbeispiel eines kontaktlosen elektrischen Verbinders, in welchem eine erste und eine zweite Transceiver-Anordnung einander gegenüber angeordnet sind, ein Abstand zwischen diesen geringer ist als 10 cm, und eine Trägerfrequenz von mehr als 50 GHz vorgesehen ist, ist die maximale Sendeleistung vorzugsweise kleiner als 0 dBm. Dabei stehen die erste und die zweite Transceiveranordnung vorzugsweise über eine Inband-VollduplexKommunikation in Verbindung.

Die Größe von Antennen skaliert allgemein mit der verwendeten Betriebswellenlänge. Ein besonderer Vorteil der vorstehend genannten, vergleichsweise hohen Trägerfrequenzen, ist neben der damit einhergehenden hohen Datenrate der Signalübertragung daher auch in den kleinen Wellenlängen der elektromagnetischen Wellen zu sehen, was es ermöglicht, die Antennen und die beteiligten Strukturen entsprechend klein auszugestalten, so dass sich die Erfindung besonders vorteilhaft zur Realisierung eines kontaktlosen Verbinders mit geringen Raumanforderungen eignen kann, wie nachfolgend noch vorgeschlagen.

Insbesondere wenn eine entsprechend hohe Trägerfrequenz gewählt wird, kann die Datenrate bei der Signalübertragung größer sein als 0,2 Gbit/s, vorzugsweise größer sein als 0,5 Gbit/s, besonders bevorzugt größer sein als 1,0 Gbit/s.

Die Erfindung betrifft auch ein Kommunikationssystem, aufweisend eine erste Transceiveranordnung und eine zweite Transceiveranordnung, jeweils gemäß den vorstehenden und nachfolgenden Ausführungen, zur Bereitstellung einer drahtlosen Signalübertragung zwischen den jeweiligen Schaltungsanordnungen der Transceiveranordnungen, insbesondere zur Bereitstellung eines Inband-Vollduplex-Kommunikationskanals zwischen den Transceiveranordnungen.

Auf vorteilhafte Weise kann ein kompaktes, energieeffizientes Inband-Vollduplex Kommunikationssystem mit voneinander isolierten Sende- und Empfangsantennen eines jeweiligen Kommunikationspartners bereitgestellt werden, welches eine sehr schnelle Datenübertragung unter mechanischer Rotation über sehr kurze Entfernungen bei engen Einbaubedingungen ermöglicht.

Das erfindungsgemäße Kommunikationssystem kann besonders vorteilhaft zur drahtlosen Übertragung zwischen zueinander beweglich angeordneten elektrischen Einrichtungen verwendbar sein, vorzugsweise als Ersatz von Schleifkontakten. Das vorgeschlagene Kommunikationssystem kann vorteilhaft sein, wenn die beiden Kommunikationspartner, also die erste Transceiveranordnung und die zweite Transceiveranordnung, im Betrieb einen veränderbaren oder unbekannten Drehwinkel relativ zueinander aufweisen, so dass die Sendeantennen und Empfangsantennen nicht immer definiert aufeinander ausrichtbar sind.

Das erfindungsgemäße Kommunikationssystem kann sich insbesondere zur Verwendung mit Motoren bzw. rotierenden Maschinen oder Linearaktoren eignen. Mögliche Einsatzgebiete betreffen die Energietechnik (beispielsweise Windräder und Generatoren) und die Fahrzeugtechnik (insbesondere Elektromotoren, Generatoren, verstellbare Ausstattungsgegenstände wie Sitze, Außenspiegel oder sogar Autotüren). Die Erfindung eignet sich auch besonders vorteilhaft zur Verwendung in der Robotik im Bereich von Gelenkverbindungen, in der Medizintechnik oder allgemein in der Industrie, insbesondere auch wenn hermetisch abgeschlossene Systeme vorgesehen sind.

In einer vorteilhaften Weiterbildung kann vorgesehen sein, dass die beiden Transceiveranordnungen für die drahtlose Signalübertragung maximal 10 Zentimeter voneinander beabstandet angeordnet sind, vorzugsweise maximal 5 Zentimeter voneinander beabstandet angeordnet sind, besonders bevorzugt maximal 2 Zentimeter voneinander beabstandet angeordnet sind, ganz besonders bevorzugt maximal 1 Zentimeter voneinander beabstandet angeordnet sind, und noch weiter bevorzugt maximal 0,5 Zentimeter voneinander beabstandet angeordnet sind, beispielsweise zwischen 1,0 Millimeter bis 3,0 Zentimeter voneinander beabstandet.

Der Abstand zwischen den Transceiveranordnungen kann dabei als der kürzeste Abstand zwischen dem gemeinsamen Mittelpunkt der Sendeantennengruppe der ersten Transceiveranordnung und dem gemeinsamen Mittelpunkt der Empfangsantennengruppe der zweiten Transceiveranordnung definiert sein.

Somit wird vorgeschlagen, für die Übertragung über vergleichsweise kurze Entfernungen Antennen zu verwenden. Dies ist bekannten Ansätzen der Technik gegenläufig, bei denen für kurze Übertragungsentfernungen in der Regel Systeme verwendet werden, welche auf die Überkopplung zwischen benachbarten Leitern setzen, beispielsweise durch den Einsatz von Hohlleitern. Antennen sind hingegen Wellenformwandler, welche leitungsgeführte elektromagnetische Wellen in Freiraumwellen umwandeln - und umgekehrt. Somit sind sie zur kontaktlosen Datenübertragung über sehr kurze Entfernungen in der Regel ungeeignet. Durch die vorgeschlagene Antennenanordnung können die Nachteile allerdings überwunden werden, wodurch sich ein kostengünstiges, kleines System realisieren lässt, mit geringer Leistungsaufnahme und hoher elektromagnetischer Verträglichkeit. Aufgrund der inhärenten Dämpfungseigenschaften der Antennenanordnung und der damit einhergehenden Möglichkeit eines Inband-Vollduplex-Betriebes können außerdem hohe Datenraten bei der Signalübertragung erreicht werden.

Grundsätzlich eignet sich die Erfindung besonders vorteilhaft zur Verwendung im Nahfeld bzw. zur drahtlosen Übertragung über kurze Wegstrecken. Die Erfindung kann sich generell aber auch zur Fernfeldübertragung bzw. zur Übertragung über weitere als die vorstehend genannten Strecken eignen. Grundsätzlich kann der Abstand zwischen den beiden Transceiveranordnungen daher beliebig sein, beispielweise auch größer sein als 10 Zentimeter, beispielsweise 20 bis 100 Zentimeter oder mehr betragen.

In einer vorteilhaften Weiterbildung der Erfindung kann vorgesehen sein, dass die beiden Transceiveranordnungen relativ zueinander um eine gemeinsame Drehachse drehbar sind.

Die Mittelpunkte der jeweiligen Antennenanordnungen bzw. die gemeinsamen Mittelpunkte der Antennen der jeweiligen Antennenanordnung sind dabei vorzugsweise koaxial zueinander angeordnet und fallen mit der gemeinsamen Drehachse zusammen.

Es kann auch vorgesehen sein, dass die beiden Transceiveranordnungen relativ zueinander translatorisch bewegbar sind, beispielsweise entlang einer Führung, insbesondere in oder entgegen der Hauptstrahlrichtung der Antennen.

In einer vorteilhaften Weiterbildung kann vorgesehen sein, dass das Kommunikationssystem einen kontaktlosen elektrischen Verbinder aufweist, in dem die erste Transceiveranordnung angeordnet ist und einen mit dem Verbinder mechanisch verbindbaren kontaktlosen elektrischen Gegenverbinder, in dem die zweite Transceiveranordnung angeordnet ist.

Es kann somit ein kontaktloser (insbesondere bezogen auf elektrische Kontakte) Verbinder bzw. ein drahtloser Verbinder, also ein Verbinder mit einer Funkschnittstelle bereitgestellt werden. Die jeweilige Transceiveranordnung kann in dem Verbinder bzw. Gegenverbinder optional hermetisch abgeschlossen aufgenommen sein.

Vorzugsweise können der Verbinder und der Gegenverbinder vollständig kontaktlos ausgebildet sein, also mechanisch und elektrisch kontaktlos, so dass sich der Verbinder und der Gegenverbinder nicht berühren. Verbinder und Gegenverbinder können daher galvanisch und/oder mechanisch voneinander getrennt ausgebildet sein.

Ein elektrisch und optional auch mechanisch kontaktloser Verbinder weist gegenüber einem herkömmlichen, kontaktmachenden Verbinder den Vorteil des geringeren Verschleißes auf, da keine Steckvorgänge erforderlich sind, die mit der Zeit zu mechanischem Abrieb der Leiterkontakte führen. Ein weiterer Vorteil eines kontaktlosen Datensteckers bzw. Verbinders ist darin zu sehen, dass sich Verbinder und Gegenverbinder im Betrieb (soweit es im Rahmen der Anwendung vorgesehen ist) relativ zueinander bewegen können. Damit kann beispielsweise der besonders verschleißbehaftete Einsatz von Schleifkontakten oder von sich mitbewegenden und damit mechanischer Belastung ausgesetzten Kabeln vermieden werden.

Der Verbinder und der Gegenverbinderverbinder können miteinander verrastbar sein. Der Verbinder kann zumindest ein erstes Rastmittel und der Gegenverbinder ein mit dem ersten Rastmittel korrespondierendes, zweites Rastmittel aufweisen. Die Rastmittel können beispielsweise als Rastnase, Schnapphaken, Federlasche, Rastausnehmung, Rücksprung oder sonstige Verrastmöglichkeit ausgebildet sein. Auch ein Rasthebel oder eine sonstige Sicherung der geschlossenen Steckverbindung kann vorgesehen sein. Die Verrastung ist vorzugsweise derart ausgebildet, dass der Verbinder und der Gegenverbinder auch nach der Verrastung noch in zumindest einem Freiheitsgrad - optional innerhalb definierter Grenzen - relativ zueinander bewegbar sind, beispielsweise translatorisch in Steckrichtung bzw. entlang der Hauptstrahlrichtung der Antennen oder rotatorisch um die vorstehend bereits genannte Drehachse. Vorzugsweise ist der Verbinder relativ zu dem Gegenverbinder verdrehbar und/oder zumindest bereichsweise verschiebbar (insbesondere auch im verbundenen Zustand).

Die Erfindung betrifft auch eine Aktuatoreinrichtung, insbesondere ein Industrierobotersystem, aufweisend ein erstes Aktuatorglied, ein zweites Aktuatorglied und ein Kommunikationssystem gemäß den vorstehenden und nachfolgenden Ausführungen, wobei die erste Transceiveranordnung an dem ersten Aktuatorglied und die zweite Transceiveranordnung an dem zweiten Aktuatorglied angeordnet ist, um eine drahtlose Signalübertragung zwischen den beiden Aktuatorgliedern zu ermöglichen.

Auf vorteilhafte Weise kann im Rahmen der Aktuatoreinrichtung, insbesondere im Rahmen eines mehrachsigen Industrierobotersystems, eine kontaktlose, bidirektionale Datenübertragung (Vollduplex) im gleichen oder zumindest in einem überlappenden Frequenzband (Inband-Vollduplex) bereitgestellt werden, wobei besagte Kommunikation unabhängig von der gegenseitigen Rotation der Kommunikationspartner ermöglicht werden kann.

Schließlich betrifft die Erfindung außerdem ein Verfahren zum Betreiben einer Antennenanordnung einer Transceiveranordnung, insbesondere einer Hochfrequenz-Transceiveranordnung, aufweisend zumindest die folgenden Verfahrensschritte:
- Bereitstellen einer Sendeantennengruppe aus einer ersten Sendeantenne und einer zweiten Sendeantenne, die jeweils an einem symmetrischen Anschluss eines ersten Balun angeschlossen sind;
- Bereitstellen einer Empfangsantennengruppe aus einer ersten Empfangsantenne und einer zweiten Empfangsantenne, die jeweils an einem symmetrischen Anschluss eines zweiten Balun angeschlossen sind;
- Betreiben der Sendeantennengruppe über einen Sendesignalpfad der Transceiveranordnung, der mit dem ersten Balun über dessen asymmetrischen Anschluss verbunden ist;
- Betreiben der Empfangsantennengruppe über einen von dem Sendesignalpfad unabhängigen Empfangssignalpfad der Transceiveranordnung, der mit dem zweiten Balun über dessen asymmetrischen Anschluss verbunden ist; wobei
die erste Sendeantenne, die zweite Sendeantenne, die erste Empfangsantenne und die zweite Empfangsantenne in einer relativen räumlichen Lage zueinander angeordnet sind, so dass Übersprechen zwischen der Sendeantennengruppe und der Empfangsantennengruppe aufgrund der differenziellen Verschaltung deren jeweiliger Antennen zumindest reduziert wird, wobei jede der Empfangsantennen zu beiden Sendeantennen denselben Mitte-zu-Mitte-Abstand aufweist.

Durch den differentiellen Betrieb der Sendeantennen und der Empfangsantennen ergibt sich der Vorteil, dass die Anpassung am asymmetrischen Anschluss des Balun erheblich verbessert ist als die Anpassung der einzelnen Antennen. Die verbesserte Anpassung führt wiederum zu einem ebeneren Frequenzgang des Übertragungskanals von Kommunikationspartner zu Kommunikationspartner und damit zu geringeren Kanalverzerrungen. Geringere Kanalverzerrungen führen schließlich zu reduzierter Intersymbolinterferenz, was wiederum eine höhere Datenrate ermöglicht.

Merkmale, die im Zusammenhang mit einem der Gegenstände der Erfindung, namentlich gegeben durch die Antennenanordnung, die Transceiveranordnung, das Kommunikationssystem, die Aktuatoreinrichtung oder das Verfahren beschrieben wurden, sind auch für die anderen Gegenstände der Erfindung vorteilhaft umsetzbar. Ebenso können Vorteile, die im Zusammenhang mit einem der Gegenstände der Erfindung genannt wurden, auch auf die anderen Gegenstände der Erfindung bezogen verstanden werden.

Ergänzend sei darauf hingewiesen, dass Begriffe wie "umfassend", "aufweisend" oder "mit" keine anderen Merkmale oder Schritte ausschließen. Ferner schließen Begriffe wie "ein" oder "das", die auf eine Einzahl von Schritten oder Merkmalen hinweisen, keine Mehrzahl von Merkmalen oder Schritten aus - und umgekehrt.

In einer puristischen Ausführungsform der Erfindung kann allerdings auch vorgesehen sein, dass die in der Erfindung mit den Begriffen "umfassend", "aufweisend" oder "mit" eingeführten Merkmale abschließend aufgezählt sind. Dementsprechend kann eine oder können mehrere Aufzählungen von Merkmalen im Rahmen der Erfindung als abgeschlossen betrachtet werden, beispielsweise jeweils für jeden Anspruch betrachtet. Die Erfindung kann beispielsweise ausschließlich aus den in Anspruch 1 genannten Merkmalen bestehen.

Es sei erwähnt, dass Bezeichnungen wie "erstes" oder "zweites" etc. vornehmlich aus Gründen der Unterscheidbarkeit von jeweiligen Vorrichtungs- oder Verfahrensmerkmalen verwendet werden und nicht unbedingt andeuten sollen, dass sich Merkmale gegenseitig bedingen oder miteinander in Beziehung stehen.

Ferner sei betont, dass die vorliegend beschriebenen Werte und Parameter Abweichungen oder Schwankungen von ±10% oder weniger, vorzugsweise ±5% oder weniger, weiter bevorzugt ±1% oder weniger, und ganz besonders bevorzugt ±0,1% oder weniger des jeweils benannten Wertes bzw. Parameters mit einschließen, sofern diese Abweichungen bei der Umsetzung der Erfindung in der Praxis nicht ausgeschlossen sind. Die Angabe von Bereichen durch Anfangs- und Endwerte umfasst auch all diejenigen Werte und Bruchteile, die von dem jeweils benannten Bereich eingeschlossen sind, insbesondere die Anfangs- und Endwerte und einen jeweiligen Mittelwert.

Nachfolgend soll im Rahmen des erfinderischen Gesamtkonzepts noch eine separate Erfindung beschrieben werden. Die Anmelderin behält sich explizit vor, die nachfolgend beschriebenen Gegenstände separat zu beanspruchen.

Die separate Erfindung betrifft eine Dämpfungsanordnung für eine Antennenanordnung, wobei die Dämpfungsanordnung um eine oder mehrere Antennen der Antennenanordnung herum anordenbar ist, vorzugsweise auf einer Basisfläche (z. B. eine Seitenfläche einer Leiterplatte), mit der die Antennen verbunden sind. Die Dämpfungsanordnung weist zumindest eine erste Dämpfungseinheit mit einer Zugangsöffnung auf, innerhalb der die besagten Antennen gemeinsam anordenbar sind, wobei die Mittelachse der Zugangsöffnung entlang einer Hauptabstrahlrichtung der Antennenanordnung und/oder durch einen gemeinsamen Mittelpunkt besagter Antennen verläuft.

Die separate Erfindung betrifft außerdem eine Antennenanordnung, aufweisend eine oder mehrere Antennen, vorzugsweise die Basisfläche, und die vorstehend genannte Dämpfungsanordnung.

Die Merkmale der nachfolgenden Patentansprüche, insbesondere der Ansprüche 14 und 15, sowie die in der vorliegenden Beschreibung beschriebenen Merkmale und Vorteile betreffend die Antennenanordnung, Dämpfungsanordnung und weiteren Gegenstände sind als vorteilhafte Ausführungsformen und Varianten der separaten Erfindung zu verstehen.

Nachfolgend werden Ausführungsbeispiele der Erfindung anhand der Zeichnungen näher beschrieben.

Die Figuren zeigen jeweils bevorzugte Ausführungsbeispiele, in denen einzelne Merkmale der vorliegenden Erfindung in Kombination miteinander dargestellt sind. Merkmale eines Ausführungsbeispiels sind auch losgelöst von den anderen Merkmalen des gleichen Ausführungsbeispiels umsetzbar und können dementsprechend von einem Fachmann ohne Weiteres zu weiteren sinnvollen Kombinationen und Unterkombinationen mit Merkmalen anderer Ausführungsbeispiele verbunden werden.

In den Figuren sind funktionsgleiche Elemente mit denselben Bezugszeichen versehen.

Es zeigen schematisch:
- Figur 1: eine erfindungsgemäße Antennenanordnung mit elliptischen Patchantennen in einer Draufsicht;
- Figur 2: eine beispielhafte, weitere Patchantenne zur Verwendung in der erfindungsgemäßen Antennenanordnung mit quadratischer Geometrie und zwei diagonal gegenüberliegenden, abgeschrägten Ecken;
- Figur 3: eine beispielhafte, weitere Patchantenne zur Verwendung in der erfindungsgemäßen Antennenanordnung mit quadratischer Geometrie und einer zentralen, schlitzförmigen Ausnehmung;
- Figur 4: eine beispielhafte, weitere Patchantenne zur Verwendung in der erfindungsgemäßen Antennenanordnung mit runder Geometrie und zwei quadratisch ausgestanzten bzw. ausgesparten Randbereichen;
- Figur 5: eine beispielhafte, weitere Patchantenne zur Verwendung in der erfindungsgemäßen Antennenanordnung mit dreieckiger Geometrie;
- Figur 6: eine beispielhafte, weitere Patchantenne zur Verwendung in der erfindungsgemäßen Antennenanordnung mit rechteckiger, länglicher Geometrie;
- Figur 7: eine erfindungsgemäße Antennenanordnung mit Nahfeldkopplung bzw. kapazitiver Kopplung in einer seitlichen Schnittdarstellung;
- Figur 8: die Antennenanordnung der Figur 7 in einer Draufsicht;
- Figur 9: eine erfindungsgemäße Antennenanordnung mit direkter Kopplung mittels Durchkontaktierungen in einer seitlichen Schnittdarstellung;
- Figur 10: eine erfindungsgemäße Antennenanordnung mit direkter Kopplung mittels einer Mikrostreifenleitung in einer Draufsicht;
- Figur 11: eine erfindungsgemäße Antennenanordnung mit Kopplung über eine als Schlitzantenne ausgebildete Zwischenantenne in einer seitlichen Schnittdarstellung;
- Figur 12: eine erfindungsgemäße Antennenanordnung mit einer umlaufenden Schirmungsanordnung aus Durchkontaktierungen in einer Draufsicht;
- Figur 13: eine erfindungsgemäße Transceiveranordnung;
- Figur 14: ein erfindungsgemäßes Kommunikationssystem mit einem elektrischen Verbinder und einem elektrischen Gegenverbinder;
- Figur 15: ein weiteres erfindungsgemäßes Kommunikationssystem mit zueinander verdreht angeordneten Kommunikationspartnern;
- Figur 16: Simulationsergebnisse der Übertragungs- und Isolationscharakteristik eines erfindungsgemäßen Kommunikationssystems;
- Figur 17: eine Aktuatoreinrichtung gemäß einem Ausführungsbeispiel der Erfindung;
- Figur 18: ein weiteres erfindungsgemäßes Kommunikationssystem mit zwei Kommunikationspartnern, mit einer jeweiligen Dämpfungsanordnung gemäß einer ersten Variante;
- Figur 19: eine weitere erfindungsgemäße Transceiveranordnung mit einer Dämpfungsanordnung gemäß einer zweiten Variante in einer perspektivischen Darstellung; und
- Figur 20: zwei der in Figur 19 gezeigten Transceiveranordnungen im Rahmen eines weiteren erfindungsgemäßen Kommunikationssystems.

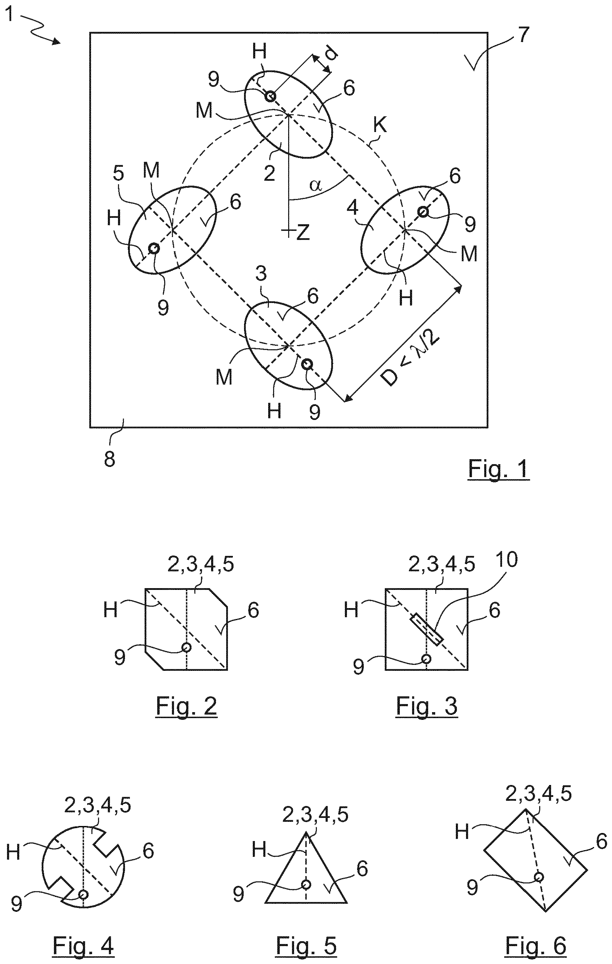

Figur 1 zeigt schematisiert eine erfindungsgemäße Antennenanordnung 1 zur Verwendung innerhalb eines Vollduplex-Kommunikationskanals. Die Antennenanordnung 1 weist eine aus einer ersten planaren Sendeantenne 2 und einer zweiten planaren Sendeantenne 3 gebildete Sendeantennengruppe auf, sowie eine erste planare Empfangsantenne 4 und eine zweite planare Empfangsantenne 5 mit identischem Aufbau, die zusammen mit der ersten Empfangsantenne 4 eine Empfangsantennengruppe bildet.

Alle Sendeantennen 2, 3 können in den Ausführungsbeispielen einen identischen Aufbau aufweisen. Vorzugsweise können auch die Empfangsantennen 4, 5 einen identischen Aufbau mit den Sendeantennen 2, 3 aufweisen, d. h. insbesondere Geometrie, Material und Einspeisepunkt der Antennen 2, 3, 4, 5 können jeweils identisch sein.

Die Sendeantennen 2, 3 und die Empfangsantennen 4, 5 sind mit ihren jeweiligen Hauptflächen 6 parallel zu einer gemeinsamen Basisfläche 7 um einen gemeinsamen Mittelpunkt bzw. um ein gemeinsames Drehzentrum Z herum angeordnet. Die Basisfläche 7 ist vorzugsweise auf einer elektrischen Baugruppe ausgebildet, die die Antennen 2, 3, 4, 5 aufweist. Bei der Basisfläche 7 kann es sich insbesondere um eine Außenmetallisierungsfläche, z. B. das Top-Layer oder das Botom-Layer, einer elektrischen Leiterplatte 8 handeln. Das Drehzentrum Z ist vorzugsweise mittig zwischen den beiden Sendeantennen 2, 3 gebildet und im Ausführungsbeispiel außerdem auch mittig zwischen den beiden Empfangsantennen 4, 5 gebildet, was allerdings nicht einschränkend zu verstehen ist. In dem Ausführungsbeispiel sind alle Antennen 2, 3, 4, 5 mit ihren Mittelpunkten M auf einem gemeinsamen, gedachten Kreisumfang K angeordnet, dessen Mittelpunkt mit dem Drehzentrum Z zusammenfällt.

Die Sendeantennen 2, 3 sind um das Drehzentrum Z 180° zueinander verdreht angeordnet. Auch die Empfangsantennen 4, 5 sind entsprechend um 180° zueinander verdreht angeordnet, wobei die Empfangsantennen 4, 5 außerdem jeweils um 90° zu den entlang des Kreisumfangs K benachbarten Sendeantennen 2, 3 verdreht angeordnet sind. Die Drehung der Antennen 2, 3, 4, 5 erfolgt dabei um das Drehzentrum Z umlaufend jeweils in dieselbe Richtung, im Ausführungsbeispiel rechts umlaufend, und ist in Figur 1 insbesondere anhand der Position der Einspeisepunkte 9 der Antennen 2, 3, 4, 5 gut erkennbar.

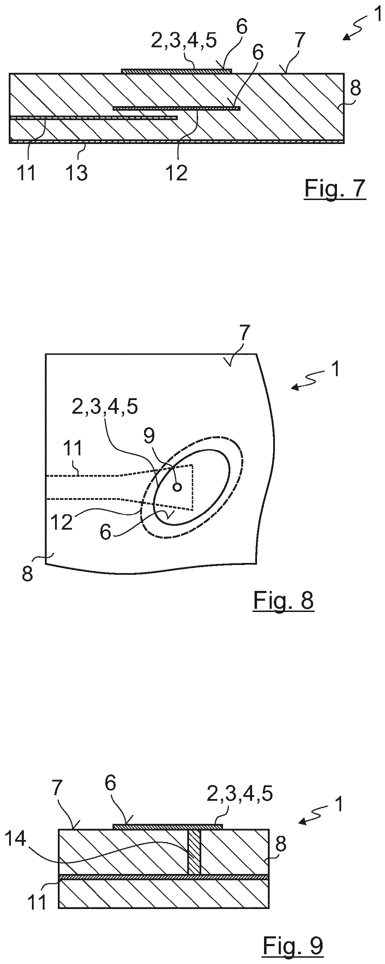

In anderen Ausführungsbeispielen kann die Drehung der Antennen 2, 3, 4, 5 auch anhand der mitgedrehten Speiseleitungen der Antennen 2, 3, 4, 5 erkennbar sein, z. B. wie bei einer kapazitiv angekoppelten Speiseleitung, siehe auch Figur 8.

Die erste Empfangsantenne 4 weist zu den beiden Sendeantennen 2, 3 denselben Mitte-zu-Mitte-Abstand D auf. Im Ausführungsbeispiel weist auch die zweite Empfangsantenne 5 zu beiden Sendeantennen 2, 3 denselben Mitte-zu-Mitte-Abstand D auf, wobei der Mitte-zu-Mitte-Abstand D der zweiten Empfangsantenne 5 mit dem der ersten Empfangsantenne 4 identisch ist. Hieraus ergibt sich insgesamt die dargestellte geometrische Anordnung der Figur 1.

Der Mitte-zu-Mitte-Abstand D der Empfangsantennen 4, 5 zu den entlang des Kreisumfangs K benachbarten Sendeantennen 2, 3 ist dabei vorzugsweise kleiner als die halbe Wellenlänge λ der zu übertragenden elektromagnetischen Welle, wobei der Abstand zwischen den beiden Sendeantennen 2, 3 und der Abstand zwischen den beiden Empfangsantennen 4, 5 vorzugsweise genau der halben Wellenlänge λ der zu übertragenden elektromagnetischen Welle entspricht, oder ebenfalls kleiner ist als die halbe Wellenlänge λ.

Vorzugsweise sind außerdem die Empfangsantennen 4, 5 und die Sendeantennen 2, 3 derart zueinander angeordnet, dass deren jeweilige Hauptsymmetrieachsen H einen Orientierungswinkel α von im Wesentlichen oder vorzugsweise genau 45° ausbilden. Dabei sind die Hauptsymmetrieachsen H der entlang des Kreisumfangs K benachbarten Antennen 2, 3, 4, 5 orthogonal zueinander ausgerichtet, wie dargestellt. Vornehmlich kommt es allerdings nicht unbedingt auf den tatsächlichen Orientierungswinkel α an, sondern vielmehr darauf, dass dieser bei allen Antennen 2, 3, 4, 5 identisch ist.

Durch einen identischen Orientierungswinkel α an allen Antennen 2, 3, 4, 5 und/oder durch die Anordnung aller Antennen 2, 3, 4, 5 mit ihren Mittelpunkten M auf dem gemeinsamen, gedachten Kreisumfang K kann ein Übersprechen zwischen der Sendeantennengruppe und der Empfangsantennengruppe durch die differenzielle Verschaltung deren jeweiliger Antennen 2, 3, 4, 5 zumindest reduziert werden.

Die Antennen 2, 3, 4, 5 weisen einen jeweiligen außermittig versetzten Einspeisepunkt 9 auf, wobei der jeweilige außermittige Versatz d bei allen Antennen 2, 3, 4, 5 identisch ist. Vorzugsweise befindet sich der Einspeisepunkt 9 auf der Hauptsymmetrieachse H, dies ist allerdings nicht unbedingt erforderlich. Der Einspeisepunkt 9 wird in der Regel auf eine Eingangsimpedanz von 50 Ohm angepasst; hierbei sei angemerkt, dass sich auf der Hauptfläche 6 der jeweiligen Antenne 2, 3, 4, 5 dementsprechend auch mehrere mögliche Einspeisepunkte 9 ergeben können, weshalb die in den Ausführungsbeispielen angedeuteten Einspeisepunkte 9 nur exemplarisch zu verstehen sind. Grundsätzlich kann sogar vorgesehen sein, mehrere Einspeisepunkte 9 gleichzeitig zu verwenden, in der Regel ist jedoch ein einzelner Einspeisepunkt pro Antenne 2, 3, 4, 5 ausreichend.

Die dargestellte Antennenanordnung 1 ermöglicht eine außerordentlich effektive Isolation zwischen Sender und Empfänger, wenn die Sendeantennen 2, 3 der Sendeantennengruppe mit einem um 180° phasenverschobenen Signal angeregt werden und insbesondere, aber nicht notwendigerweise, wenn die Auswertung der empfangenen elektromagnetischen Welle durch die Empfangsantennen 4, 5 der Empfangsantennengruppe ebenfalls differenziell erfolgt. Gleichwohl ist der Aufbau der Antennenanordnung 1 mit technisch einfachen Mitteln möglich, beispielsweise durch einfache Leiterplattentechnik.

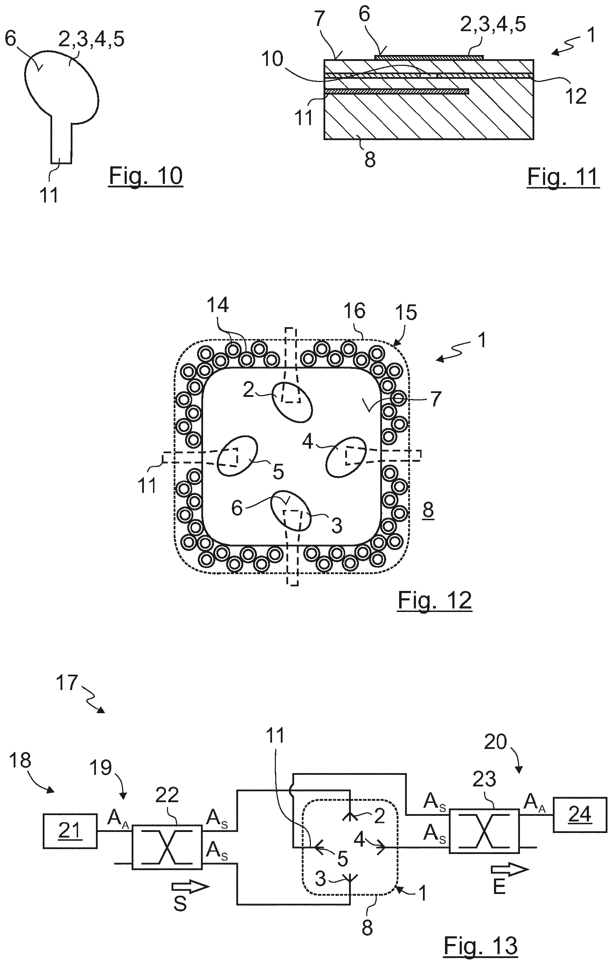

Die Antennen 2, 3, 4, 5 sind vorzugsweise als Patchantennen ausgebildet, wie in den meisten Ausführungsbeispielen dargestellt. Die Patchantenne kann insbesondere als elektrisch leitfähige Fläche bzw. metallisierte Fläche auf oder in der Leiterplatte 8 ausgebildet sein. Alternativ kann auch eine komplementäre Anordnung vorgesehen sein, wonach die Antennen 2, 3, 4, 5 als Schlitzantennen ausgebildet sind und entsprechende Ausnehmungen 10 in metallisierten Flächen aufweisen, beispielsweise in metallisierten Flächen der Leiterplatte 8 (vgl. beispielsweise Figur 3 und Figur 11).

Besonders bevorzugt weisen die jeweiligen Hauptflächen 6 der Antennen 2, 3, 4, 5 eine elliptische Geometrie auf, wie in Figur 1 und in einigen nachfolgenden Figuren dargestellt. Hierdurch kann eine besonders reine zirkulare Polarisation der elektromagnetischen Welle erzeugt werden, in der in Figur 1 dargestellten Antennenanordnung 1 beispielsweise eine rechtsdrehende zirkulare Polarisation (alternativ kann bei entsprechend um jeweils 90° verdrehter Anordnung der Antennen 2, 3, 4, 5 auch eine linksdrehende zirkulare Polarisation erzeugt werden). Alternativ können allerdings auch andere Geometrien der Antennen 2, 3, 4, 5 vorgesehen sein, von denen einige in den Figuren 2 bis 6 beispielhaft angedeutet sind.

Wie in Figur 2 gezeigt, kann beispielsweise eine quadratische Geometrie mit genau einem Paar von ausgestanzten bzw. ausgesparten, diagonal gegenüberliegenden Ecken vorgesehen sein. In diesem Fall befindet sich der Einspeisepunkt 9 vorzugsweise nicht auf der Hauptsymmetrieachse H, sondern auf einer zu der Hauptsymmetrieachse H um 45° verdrehten, durch den Mittelpunkt M der Antenne 2, 3, 4, 5 verlaufenden Geraden.

Eine weitere alternative Antenne 2, 3, 4, 5 ist in Figur 3 gezeigt, die eine schlitzförmige, diagonal angeordnete Ausnehmung 10 zentral innerhalb der elektrisch leitfähigen Hauptfläche 6 aufweist. Wiederum ist der Einspeisepunkt 9 vorzugsweise auf der um 45° zu der Hauptsymmetrieachse H ausgerichteten, durch den Mittelpunkt M der Antenne 2, 3, 4, 5 verlaufenden Geraden angeordnet.

Eine weitere alternative Antennengeometrie ist in Figur 4 gezeigt. Die Antenne 2, 3, 4, 5 ist kreisförmig ausgebildet und weist genau ein Paar von diagonal gegenüberliegenden, ausgestanzten bzw. ausgesparten quadratischen Abschnitten auf. Wiederum ist der Einspeisepunkt 9 auf der um 45° zu der Hauptsymmetrieachse H gekippten, durch den Mittelpunkt M verlaufenden Geraden angeordnet.

In Figur 5 ist als weiteres Beispiel eine Antenne 2, 3, 4, 5 mit dreieckiger Geometrie dargestellt, wobei der Einspeisepunkt 9 auf der Hauptsymmetrieachse H außermittig versetzt ist.

Figur 6 zeigt schließlich einen länglich rechteckigen Querschnitt einer Antenne 2, 3, 4, 5, wobei der Einspeisepunkt 9 wiederum auf der Hauptsymmetrieachse H angeordnet ist.

Wie bereits erwähnt, können sich auch noch weitere Einspeisepunkte 9 ergeben, beispielsweise in Figur 2 ein weiterer Einspeisepunkt 9 entlang der dargestellten Geraden über den Mittelpunkt der Antenne 2, 3, 4, 5 nach oben gespiegelt, oder in den Figuren 3, 4, 6 jeweils bis zu vier Einspeisepunkte 9.

Jede der genannten Antennen 2, 3, 4, 5 kann auch komplementär als jeweilige Schlitzantenne ausgebildet sein.

Zur Ein- und Auskopplung der elektromagnetischen Welle in die jeweilige Antenne 2, 3, 4, 5 sind verschiedene Varianten möglich. Die bevorzugte Ein- und Auskopplungstechnik ist in den Figuren 7 und 8 dargestellt. Vorzugsweise wird die elektromagnetische Welle von einer jeweiligen Speiseleitung 11 vornehmlich kapazitiv in die Sendeantennen 2, 3 eingekoppelt und vornehmlich kapazitiv aus den Empfangsantennen 4, 5 ausgekoppelt, wie in der Schnittdarstellung in Figur 7 gezeigt. Der Einspeisepunkt 9 ist daher in Figur 8 nur ein gedachter Punkt. Im Falle der kapazitiven Einkopplung lässt sich die Verdrehung der Antennen 2, 3, 4, 5 grundsätzlich gut anhand des Winkels der einlaufenden Speiseleitung 11 erkennen. Der Winkel der einlaufenden Speiseleitung 11 beeinflusst schließlich wesentlich die Polarisation der Antenne 2, 3, 4, 5. So ergibt sich beispielsweise für die in Figur 8 gezeigte Antenne 2 ,3 ,4 ,5 eine rechtszirkulare Polarisation aufgrund der unter 45° zur Hauptachse H einlaufenden Speiseleitung. Wäre die Antennenhauptfläche 6 um 90° um eine gedachte, senkrecht zur Hauptfläche 6 und durch den Mittelpunkt der Hauptfläche verlaufende Achse gedreht, würde sich eine linkszirkulare Polarisation der Antenne 2, 3, 4, 5 ergeben.

Für eine vorteilhafte Impedanzanpassung kann die Speiseleitung 11 in Richtung des Mittelpunkts M der jeweiligen Antenne 2, 3, 4, 5 eine kontinuierliche Verbreiterung erfahren (vgl. Figur 8).

Eine gestapelte Anordnung bei der Ein- und Auskopplung in die jeweilige Antenne 2, 3, 4, 5 mittels einer oder mehrerer Zwischenantennen 12 kann die Bandbreite der Anordnung weiter erhöhen. Vorzugsweise ist die Hauptfläche 6 der Zwischenantenne 12 gegenüber der Antenne 2, 3, 4, 5 vergrößert. Insofern mehrere Zwischenantennen 12 vorgesehen sind, vergrößert sich deren Hauptfläche 6 mit dem Abstand von der entsprechenden Antenne 2, 3, 4, 5.

Um eine gerichtete Abstrahlcharakteristik zu erhalten, kann eine abschließende Masseplatte 13 rückseitig der entsprechenden Antenne 2, 3, 4, 5 vorgesehen sein, wie in Figur 7 gut erkennbar. Dabei kann es sich beispielsweise um eine metallische Beschichtung der Leiterplatte 8 und/oder um ein Metallgehäuse handeln.

Als Alternative zu einer Nahfeldkopplung kann auch eine direkte Anregung vorgesehen sein, beispielsweise mittels in Figur 9 dargestellter Durchkontaktierung 14 der Leiterplatte 8 oder durch Zuführung mittels einer in die entsprechende Antenne 2, 3, 4, 5 mündenden Mikrostreifenleitung (vgl. Figur 10). Außerdem kann auch eine Einkopplung mittels einer als Schlitzantenne ausgebildeten Zwischenantenne 12 vorgesehen sein, wie in Figur 11 gezeigt.

Um die Isolationseigenschaften und die Abschirmung der Antennenanordnung 1 zu erhöhen und gegebenenfalls die Abstrahlcharakteristik weiter zu optimieren, kann eine Schirmungsanordnung 15 vorgesehen sein, wie in Figur 12 beispielhaft gezeigt.

Die Schirmungsanordnung 15 kann um die Sendeantennen 2, 3 und die Empfangsantennen 4, 5 herum angeordnet sein und die Antennen 2, 3, 4, 5 im Wesentlichen hülsenförmig einhüllen. Dabei kann die Schirmungsanordnung 15 vorzugsweise einen orthogonal zu der Basisfläche 7 verlaufenden Schirmungsmantel 16 ausbilden (in Figur 12 strichliniert angedeutet). Die Schirmungsanordnung 15 kann beispielsweise durch ein Metallblech ausgebildet sein oder alternativ, wie in der Figur 12 gezeigt, aus einzelnen Durchkontaktierungen 14 ausgebildet sein, die sich durch die Leiterplatte 8 hindurch erstrecken und vorzugsweise regelmäßig und ganz besonders bevorzugt zumindest zweireihig angeordnet sind.

Ein Vorteil der Schirmungsanordnung 15 in Kombination mit der Antennenanordnung 1 ist in der Abschirmung der um die Antennenanordnung 1 herum angeordneten Leiterstrukturen vom Strahlungsfeld der Antennen 2, 3, 4, 5 zu sehen. Insbesondere asymmetrisch angeordnete Leiterstrukturen können die Strahlungsfelder der Sendeantennen 2, 3 und Empfangsantennen 4, 5 unterschiedlich beeinflussen und somit zu einem ungleichmäßigen Übersprechen zwischen den Sendeantennen 2, 3 zu den Empfangsantennen 4, 5 führen. Die Folge kann sein, dass sich das Übersprechen der beiden Sendeantennen 2, 3 zu den Empfangsantennen nicht mehr bzw. nur noch teilweise auslöschen kann, was die Antennenisolation vermindern kann.

In Figur 13 ist beispielhaft eine erfindungsgemäße Transceiveranordnung 17 dargestellt. Die Transceiveranordnung 17 weist eine Antennenanordnung 1 gemäß den vorstehenden Ausführungen auf sowie eine Schaltungsanordnung 18 mit einer Sendeeinheit (TX) 19 und einer Empfangseinheit (RX) 20.

Die Sendeeinheit 19 ist mit den beiden Sendeantennen 2, 3 verbunden, um eine elektromagnetische Welle durch differenzielle Anregung der beiden Sendeantennen 2, 3 abzustrahlen. Hierfür weist die Sendeeinheit 19 im Sendesignalpfad S eine erste Signalverarbeitungskomponente 21 und die Sendeantennengruppe einen ersten Balun bzw. ein erstes Symmetrierglied 22 auf, um die Sendeantennen 2, 3 mit einem um 180° phasenverschobenen elektrischen Signal anzuregen. Das erste Symmetrierglied 22 ist vorzugsweise als 180° Hybridkoppler ausgebildet. Die erste Sendeantenne 2 und die zweite Sendeantenne 3 sind jeweils an einem symmetrischen Anschluss As des ersten Balun 22 angeschlossen. Die Sendeeinheit 19 bzw. die Signalverarbeitungskomponente 21 der Sendeeinheit 19 ist an einem asymmetrischen Anschluss A_{A} des ersten Balun 22 angeschlossen.

Die Empfangseinheit 20 ist zum differenziellen Empfang mit den beiden Empfangsantennen 4, 5 über einen zweiten Balun der Empfangsantennengruppe bzw. über ein zweites Symmetrierglied 23 verbunden, vorzugsweise ebenfalls ein 180° Hybridkoppler, um die elektromagnetische Welle zu empfangen und an eine zweite Signalverarbeitungskomponente 24 im Empfangssignalpfad E weiterzuleiten. Die erste Empfangsantenne 3 und die zweite Empfangsantenne 4 sind jeweils an einem symmetrischen Anschluss A_{S} des zweiten Balun 23 angeschlossen. Die Empfangseinheit 20 bzw. die Signalverarbeitungskomponente 24 der Empfangseinheit 20 ist an einem asymmetrischen Anschluss A_{A} des zweiten Balun 23 angeschlossen.

Unabhängigkeit zwischen dem Sendesignalpfad S und dem Empfangssignalpfad E innerhalb derselben Transceiveranordnung 17 besteht zum Beispiel darin, dass diese der Führung unterschiedlicher, d. h. nicht korrelierter, Signale dienen können. Der Sendesignalpfad S kann ein Sendesignal führen, welches über die Sendeantennen 2, 3 abgestrahlt werden kann und zu einer zweiten Transceiveranordnung 17 drahtlos übertragen werden kann. Der Empfangssignalpfad E kann ein Empfangssignal führen, welches von der zweiten Transceiveranordnung 17 gesendet und über die Empfangsantennen 4, 5 empfangen wird.

Darüber hinaus und wie auch in Figur 13 dargestellt können Sendesignalpfad S und Empfangssignalpfad E galvanisch voneinander getrennt sein.

Mittels zwei derartiger Transceiveranordnungen 17 kann ein drahtloses Kommunikationssystem 25 ausgebildet werden. Ein solches Kommunikationssystem 25 kann einen ersten und einen zweiten Kommunikationspartner umfassen, wobei der erste Kommunikationspartner eine erste Transceiveranordnung 17 und der zweite Kommunikationspartner eine zweite Transceiveranordnung 17 der hier offenbarten Art umfassen kann. Das erfindungsgemäße Kommunikationssystem 25 eignet sich dabei besonders vorteilhaft für eine kurzstreckige drahtlose Signalübertragung von beispielsweise maximal 5 Metern und in der Regel sogar kürzeren Strecken von beispielsweise maximal 10 Zentimeter. Durch die erfindungsgemäß vorgeschlagene Antennenanordnung 1 kann eine drahtlose Kommunikation selbst im Nahfeld nahezu unabhängig, vorzugsweise vollständig unabhängig, von der Ausrichtung der beiden Transceiveranordnungen 17 zueinander möglich sein, zumindest dann, wenn die Mittelpunkte Z der Antennenanordnungen 1 auf einer gemeinsamen Rotationsachse liegen, die senkrecht zu den Leiterplatten 7 ausgerichtet ist. Die Signalübertragung kann dann insbesondere unabhängig von einer relativen Rotation der Antennenanordnungen 1 zueinander sein.

Eine vorteilhafte Anwendung ist unter anderem die Robotik als Ersatz für beispielsweise Schleifkontakte im Bereich von Gelenkverbindungen oder auch Anwendungen, bei denen eine Kommunikationsverbindung unter besonders widrigen Umgebungsbedingungen und daher vorzugsweise hermetisch abgeschirmt erfolgt.

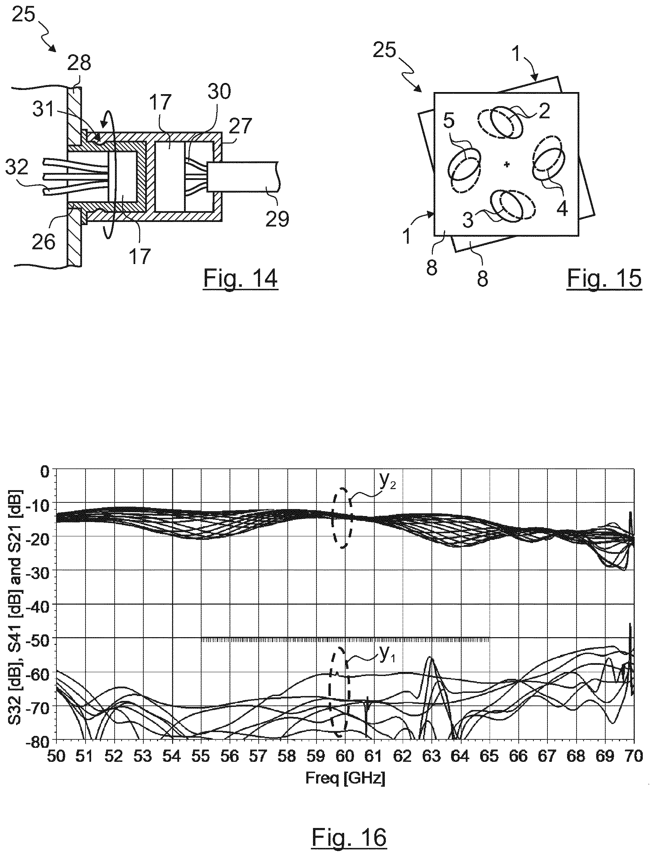

Beispielhaft ist in Figur 14 ein Kommunikationssystem 25 gezeigt, das einen elektrischen Verbinder 26 aufweist, in dem eine erste Transceiveranordnung 17 angeordnet ist und das einen mit dem Verbinder 26 mechanisch verbindbaren elektrischen Gegenverbinder 27 aufweist, in dem eine zweite Transceiveranordnung 17 angeordnet ist.

Der Verbinder 26 kann beispielsweise mit einem Gerätegehäuse 28 verbunden sein. Der Gegenverbinder 27 kann beispielsweise ein Kabelverbinder sein, in den ein elektrisches Kabel 29 mit einzelnen elektrischen Leitungen 30 mündet. Der Verbinder 26 und der Gegenverbinder 27 können Rastmittel 31 aufweisen, um im verbundenen Zustand miteinander zu verrasten. In Figur 14 ist beispielhaft eine miteinander verrastete Steckverbindung aus einem Verbinder 26 und einem Gegenverbinder 27 gezeigt, die ein Verdrehen der Partner zueinander ermöglicht. Somit kann vorteilhaft eine kontaktlose bzw. drahtlose drehrichtungsunabhängige Steckverbindung bereitgestellt werden, um elektrische Signale zwischen dem Kabel 29 bzw. den elektrischen Leitungen 30 des Kabels 29 und elektrischen Leitern 32 innerhalb des Gerätegehäuses 28 zu übertragen. Vorzugsweise können der Verbinder 26 und der Gegenverbinder 27 vollständig kontaktlos ausgebildet sein, d. h. elektrisch und mechanisch kontaktlos.

Grundsätzlich sind allerdings beliebige weitere Anwendungen denkbar, beispielsweise Anwendungen in der Energietechnik oder in der Fahrzeugtechnik.

Beispielhaft ist ein weiteres Kommunikationssystem 25 in vereinfachter Darstellung in Figur 15 gezeigt, um den besonderen Vorteil der Erfindung bei der Übertragung von zueinander verdreht angeordneten Kommunikationspartnern nochmals zu verdeutlichen. In Figur 15 sind die Antennenanordnungen 1 zueinander koaxial, jedoch um das Drehzentrum herum verdreht angeordnet, wobei durch die vorgeschlagenen Antennenanordnungen 1 dennoch eine vorteilhafte Signalübertragung stattfinden kann. Auch ein Verkippen der Antennenanordnungen 1 zueinander kann dabei ausgeglichen werden, sowie ein außermittiger Versatz der jeweiligen Drehzentren.

In Figur 16 sind Simulationsergebnisse eines erfindungsgemäßen Kommunikationssystems 25 gezeigt, um die vorteilhaften Übertragungs- und Isolationseigenschaften einer erfindungsgemäßen Antennenanordnung 1 zu verdeutlichen. Simuliert wurde eine Antennenanordnung 1 wie in Figur 1 und in den Figuren 7 und 8 dargestellt, bei einer Übertragungsbandbreite von 10 GHz und einem Abstand zwischen den beiden Transceiveranordnungen 17 bzw. Antennenanordnungen 1 von 12 Millimetern. Die einzelnen Kurven der beiden Kurvenscharen stellen die Simulationsergebnisse bei unterschiedlichen Orientierungen / Verdrehwinkeln der beiden Kommunikationspartner zueinander dar. Einerseits sind dabei die hohen Isolationseigenschaften zwischen Sender und Empfänger desselben Transceivers erkennbar (Isolation innerhalb des vorgesehenen Frequenzbandes > 50 dB, vgl. untere Kurvenschar y₁) und andererseits ist die hohe Unabhängigkeit der Transmissionseigenschaften von der Ausrichtung bzw. Orientierung der beiden Kommunikationspartner zueinander ersichtlich (vgl. obere Kurvenschar y₂).

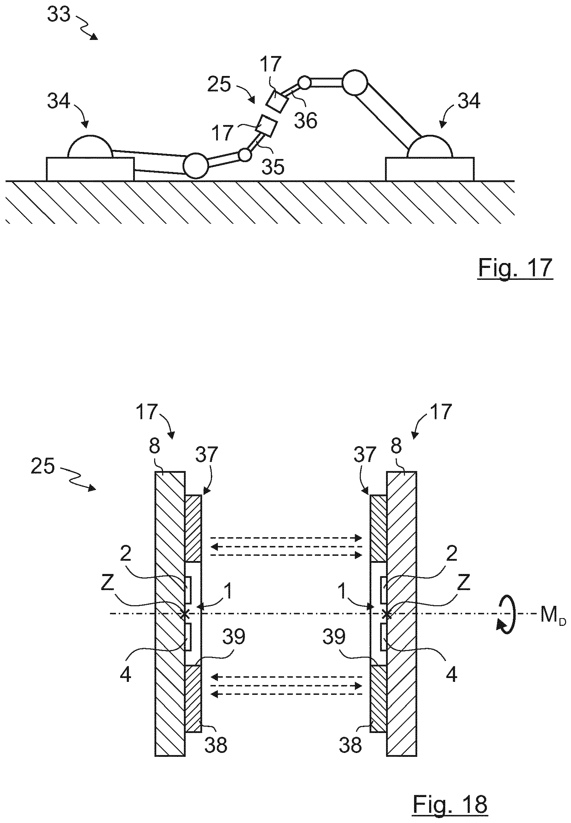

Wie bereits erwähnt, kann die Verwendung der vorgeschlagenen Antennenanordnung 1 im Rahmen aktorisch relativ zueinander beweglicher Baugruppen ebenfalls sehr vorteilhaft sein, um eine kabellose Signalübertragung auf kurze Distanzen und mit hohen Datenraten zu ermöglichen, bei hoher elektromagnetischer Verträglichkeit. In Figur 17 ist zur Verdeutlichung eine Aktuatoreinrichtung 33 angedeutet. Beispielhaft ist ein Industrierobotersystem aus zwei separaten, mehrachsigen Industrierobotern 34 gezeigt - dies soll aber nur als Beispiel dienen. Die Aktuatoreinrichtung 33 weist ein erstes Aktuatorglied 35, ein zweites Aktuatorglied 36 und ein Kommunikationssystem 25 auf, wobei die erste Transceiveranordnung 17 an dem ersten Aktuatorglied 35 und die zweite Transceiveranordnung 17 an dem zweiten Aktuatorglied 36 angeordnet sein kann, um eine drahtlose Signalübertragung zwischen den beiden Aktuatorgliedern 35, 36 zu ermöglichen. Bei den Aktuatorgliedern 35, 36 handelt es sich in dem in Figur 17 dargestellten Ausführungsbeispiel jeweils um die Endeffektoren der Industrieroboter 34 - grundsätzlich kann es sich aber um beliebige bewegliche oder unbewegliche Glieder einer allgemeinen Aktuatoreinrichtung 33 handeln. Beispielsweise können beide Aktuatorglieder 35, 36 auch Teil derselben Einrichtung, also beispielsweise desselben Industrieroboters 34 sein, beispielsweise um eine Signalübertragung entlang der einzelnen Achsen des Industrieroboters 34 zu ermöglichen, beispielsweise um Gelenkverbindungen kabellos und ohne Verwendung von Schleifkontakten etc. zu überbrücken.

Wie vorstehend bereits erwähnt, kann es im Rahmen der Signalübertragung zwischen den Kommunikationspartnern zu Reflexionen der elektromagnetischen Welle kommen, was zu einer unerwünschten Mehrwegeausbreitung führen kann. Insbesondere wenn sich die Kommunikationspartner, wie beispielsweise bei den Anwendungsbeispielen der Figuren 14, 15 und 17 nah gegenüberliegen, kann es vorkommen, dass die Reflexion an den Leiterplatten 8 erfolgt, mit denen die Antennen 2, 3, 4, 5 verbunden sind. Wie in Figur 18 strichliniert anhand von Pfeilen angedeutet, kann das Signal neben einer Übertragung über die Sichtverbindungskomponente auch zwischen den Kommunikationspartnern hin- und her reflektiert und somit über eine oder mehrere Reflexionskomponenten übertragen werden, was letztendlich zu einer Interferenz zwischen gewünschter Sichtverbindungskomponente und unerwünschter Reflexionskomponente(n) führen kann. Um diese Mehrwegeausbreitung weitestgehend zu minimieren, ohne jedoch komplexe Signalverarbeitungskomponenten, wie eine digitale Signalverarbeitung, zu verwenden, wird anhand der Figuren 18 bis 20 und den nachfolgenden Erläuterungen eine vorteilhafte Dämpfungsanordnung 37 für eine Antennenanordnung vorgeschlagen (insbesondere aber nicht ausschließlich für die vorstehende Antennenanordnung 1).

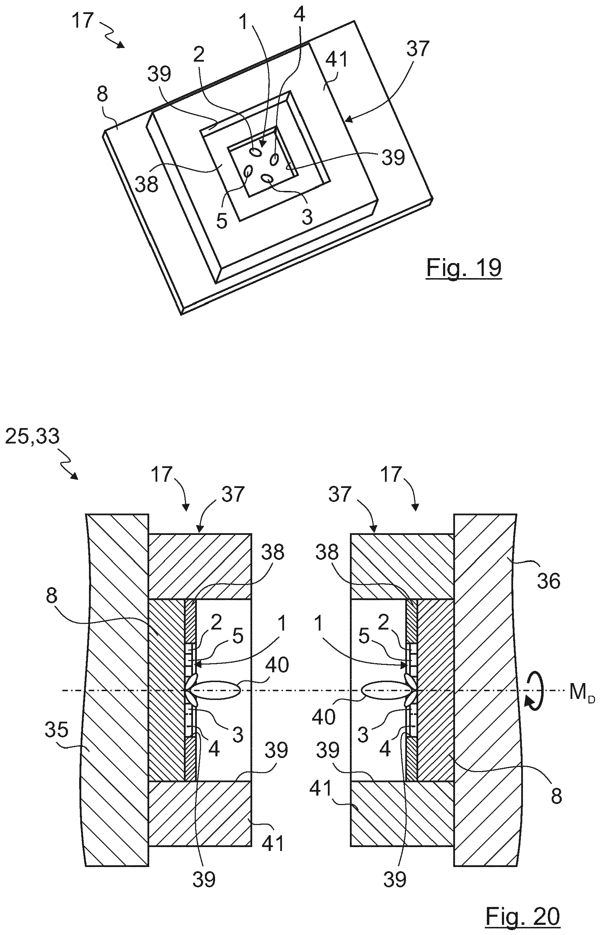

In Figur 18 ist ein Kommunikationssystem 25 aus einer ersten und einer zweiten Transceiveranordnung 17 gezeigt. Jede der Transceiveranordnungen 17 weist eine Leiterplatte 8 auf, auf der eine jeweilige Antennenanordnung 1 angeordnet ist. Um die Antennenanordnung 1 ist eine Dämpfungsanordnung 37 angeordnet, die eine erste Dämpfungseinheit 38, in den Ausführungsbeispielen eine Dämpfungsmatte, mit einer Zugangsöffnung 39 aufweist, innerhalb der die Antennen 2, 3, 4, 5 der Antennenanordnung 1 gemeinsam angeordnet sind. Die Mittelachse M_{D} der Zugangsöffnung 39 verläuft entlang der Hauptabstrahlrichtung bzw. Antennenhauptkeule 40 der Antennenanordnung 1 (vgl. Figur 20) und verläuft außerdem durch den gemeinsamen Mittelpunkt bzw. das Drehzentrum Z der Antennen 2, 3, 4, 5.

Es kann vorgesehen sein, dass die Quererstreckung der Zugangsöffnung 39 der ersten Dämpfungseinheit 38 kleiner ist als 2,0 Freiraumwellenlängen der zu übertragenden elektromagnetischen Welle, so dass die Zugangsöffnung 39 möglichst schmal ist, jedoch so, dass die Antennenhauptkeulen 40 der Antennen 2, 3, 4, 5 in einer Draufsicht nicht verdeckt werden. Die Zugangsöffnung 39 kann dabei grundsätzlich eine beliebige Geometrie aufweisen, beispielsweise kreisförmig (bevorzugt) oder quadratisch, wie in den Ausführungsbeispielen der Figuren 18 bis 20 beispielhaft gezeigt.

Durch die vorgeschlagene Dämpfungsanordnung 37 kann die Mehrwegeübertragung vorteilhaft eliminiert oder zumindest deutlich reduziert werden. Die strichliniert in Figur 18 dargestellten Reflexionen können nicht mehr oder nur noch stark vermindert auftreten.

Zur weiteren Optimierung kann die Dämpfungsanordnung 37 mit weiteren Dämpfungseinheiten erweitert werden. Das Prinzip wird anhand der Figuren 19 und 20 verdeutlicht. Es kann beispielsweise vorgesehen sein, dass die Dämpfungsanordnung 37 eine zweite Dämpfungseinheit 41 aufweist, wiederum mit einer Zugangsöffnung 39, innerhalb der die Antennenanordnung 1 angeordnet ist. Die erste Dämpfungseinheit 38 und die zweite Dämpfungseinheit 41 sind konzentrisch angeordnet und unterscheiden sich vorzugsweise (aber nicht zwingend) geometrisch und/oder durch deren jeweilige Materialzusammensetzung. Vorzugsweise weist beispielsweise die zweite Dämpfungseinheit 41 einen verlustbasierenden Absorber und die erste Dämpfungseinheit 38 einen resonanzbasierenden Absorber auf. Geeignete Materialzusammensetzungen sind vorstehend beschrieben.

Insbesondere kann vorgesehen sein, dass die erste Dämpfungseinheit 38 innerhalb der Zugangsöffnung 39 der zweiten Dämpfungseinheit 41 angeordnet ist, wie dargestellt. Dabei kann die äußere bzw. zweite Dämpfungseinheit 41 vorzugsweise dicker bzw. höher ausgebildet sein als die innere bzw. erste Dämpfungseinheit 38. Hierdurch kann den Antennenhauptkeulen 40 der Sendeantennengruppe und der Empfangsantennengruppe ausreichend Spielraum für eine Aufweitung in Strahlrichtung ermöglicht werden, ohne dass die Antennenhauptkeulen 40 eine der Dämpfungseinheiten 38, 41 in der Draufsicht schneiden.

Anhand von Figur 20 soll nun noch ganz allgemein verdeutlicht werden, wie die Transceiveranordnungen 17 des Kommunikationssystems 25 ausgerichtet werden können, um Übertragungsverluste gering zu halten. Vorzugsweise sind die Antennenhauptkeulen 40 der Sendeantennen 2, 3 des ersten Kommunikationspartners und die Empfangsantennen 4, 5 des zweiten Kommunikationspartners (und umgekehrt) aufeinander auszurichten, z. B. entlang der Mittelachse M_{D} der Dämpfungsanordnung bzw. derart, dass die jeweiligen gemeinsamen Mittelpunkte bzw. Drehzentren Z der Antennenanordnungen 1 beider Kommunikationspartner durch eine gemeinsame Dreh- bzw. Mittelachse verlaufen. Die Antennenhauptkeule 40 einer Patchantenne weist beispielsweise senkrecht von der Patchantenne weg, während sich in der entgegengesetzten Richtung, das heißt in die Leiterplatte 8 hinein, ein Antennengewinn-Minimum befindet. Daher ist es vorteilhaft, die Leiterplatten 8 der beiden Kommunikationspartner parallel oder zumindest im Wesentlichen parallel zueinander auszurichten, so dass die Patchantennen einander zugewandt sind, wie dargestellt. Die Transceiveranordnungen 17 des Ausführungsbeispiels der Figur 20 können beispielsweise an einem jeweiligen Aktuatorglied 35, 36 einer Aktuatoreinrichtung 33 angeordnet sein, die eine relative Drehbewegung zueinander ausführen können.

Innerhalb der Antennenhauptkeule 40, die eine gewisse Breite hat (beispielsweise ca. -20° bis +20° des Elevationswinkels), kann ein paralleler, translatorischer Offset möglich sein (vorstehend als "axialer Versatz" der Kommunikationspartner bezeichnet, also als Versatz zwischen den jeweiligen, durch die Mittelpunkte Z der Antennenanordnungen 1 verlaufenden Mittelachsen der Kommunikationspartner). Auch können sich die Kommunikationspartner senkrecht aufeinander zu- oder voneinander wegbewegen (vorstehend als "translatorischer Versatz" bezeichnet). Auch ein Verkippen der Kommunikationspartner ist möglich (vorstehend als "radialer Versatz" bezeichnet).

Insbesondere kann allerdings eine vollständige Rotation ("rotatorischer Versatz") der Kommunikationspartner zueinander um die gedachte, senkrecht zu den Leiterplatten 8 stehende Achse ermöglicht werden (in Figur 20 die Mittelachse Mo). Dies kann beispielsweise in der Robotik ausgenutzt werden, wenn sich ein Robotergelenk bzw. ein Aktuatorglied 35, 36 um 360° drehen soll und dabei von einer Seite des Robotergelenks zur anderen Seite kontaktlos und damit verschleißlos Daten übertragen werden sollen. Um die Rotation zu ermöglichen, sind sowohl die Sendeantennen 2, 3 des ersten Kommunikationspartners als auch die Empfangsantennen 4, 5 des zweiten Kommunikationspartners vorzugsweise zirkular polarisiert und co-polarisiert. Denkbar für eine Ermöglichung der Rotation wäre (unter der Inkaufnahme von Polarisationsverlusten) aber auch, dass entweder nur die Sendeantennen 2, 3 oder nur die Empfangsantennen 4, 5 zirkular polarisiert sind, wohingegen die jeweils anderen Antennen nur linear polarisiert sind.

Bei dem anhand der Figur 20 beschriebenen Ausführungsbeispiel ist die zweite Dämpfungseinheit 41 als optional zu betrachten.

Ein Abstand der ersten und der zweiten Transceiveranordnung 17 kann als kürzester Abstand zwischen der Antennenanordnung 1 der ersten Transceiveranordnung 17 und der zweiten Transceiveranordnung 17 parallel zur Mittelachse M_{D} definiert werden. Zum Beispiel kann der Abstand der ersten und der zweiten Transceiveranordnung 17 anhand des Abstands zwischen dem gemeinsamen Mittelpunkt Z der Antennenanordnung 1 der ersten Transceiveranordnung 17 (links in Figur 20) und dem gemeinsamen Mittelpunkt Z der Antennenanordnung 1 der zweiten Transceiveranordnung 17 (rechts in Figur 20) definiert werden.

Bei dem in Figur 20 gezeigten Kommunikationssystem 25 kann es sich um einen kontaktlosen Datenstecker bzw. elektrischen Verbinder handeln, bei welchem der Abstand zwischen der ersten und der zweiten Transceiveranordnung 17 kleiner ist als 10 cm oder sogar kleiner ist als 5 cm. Dieser kontaktlose Verbinder kann zur Datenübertragung eine Trägerfrequenz von mehr als 50 GHz nutzen, z. B. ungefähr 60 GHz, was zu kleinen Antennenabmessungen führen kann und damit eine gute Integrierbarkeit des kontaktlosen Verbinders bewirken kann. Ferner kann eine Trägerfrequenz von mehr als 50 GHz hohe Datenraten ermöglichen. Der kontaktlose Verbinder kann aufgrund der innerhalb derselben Transceiveranordnung gut voneinander isolierten Sendeantenne 2, 3 und Empfangsantennen 4, 5 eine Inband-Vollduplexkommunikation nutzen und auch somit hohe Datenraten ermöglichen. Die Sendeeinheiten 19 der Transceiveranordnungen 17 können optional einen freilaufenden, spannungsgesteuerten Oszillator zur Erzeugung einer Trägerfrequenz für die Signalübertragung aufweisen. Zusätzlich oder alternativ können die Empfangseinheiten 20 der Transceiveranordnungen 17 dazu ausgebildet sein, eine inkohärente Demodulation durchzuführen. Die Empfangseinheiten 20 können dazu einen Hüllkurvendemodulator aufweisen. Durch den freilaufenden, spannungsgesteuerten Oszillator und/oder durch den Hüllkurvendemodulator kann der Stromverbrauch des kontaktlosen Verbinders reduziert werden, was wiederum dessen Integration in z. B. Industriesysteme erleichtern kann. Der reduzierte Stromverbrauch kann auch Anforderungen an die Entwärmung des kontaktlosen Verbinderss deutlich lindern und dazu führen, dass Kühlkörper nicht erforderlich sind. Zur weiteren oder alternativen Stromeinsparung kann der hier beschriebene kontaktlose Verbinder optional auf eine digitale Signalverarbeitung, insbesondere auf eine digitale Kanalschätzung, digitale Signalvorverzerrung oder digitale Signalentzerrung, verzichten. Bedingt durch die Dämpfungsanordnungen 37 können gute Funkkanaleigenschaften, z. B. dass die Signalübertragung vornehmlich nur über die Sichtverbindungskomponente zwischen der ersten und der zweiten Transceiveranordnung 17 stattfindet und Mehrwegekomponente stark bedämpft werden, hergestellt werden. Dies kann den Verzicht auf die oben beschriebene digitale Signalverarbeitung und somit Stromeinsparung und vereinfachte Entwärmung ermöglichen. Eine Gleichleistungsaufnahme der ersten und der zweiten Transceiveranordnung 17 kann zum Beispiel jeweils geringer als 200 mW sein.

## Patentansprüche

1. Antennenanordnung (1) für eine Transceiveranordnung (17), insbesondere für eine Hochfrequenz-Transceiveranordnung, aufweisend eine Sendeantennengruppe mit einer ersten Sendeantenne (2), einer zweiten Sendeantenne (3) und einem ersten Balun (22), und eine Empfangsantennengruppe mit einer ersten Empfangsantenne (4), einer zweiten Empfangsantenne (5) und einem zweiten Balun (23), wobei die erste Sendeantenne (2) und die zweite Sendeantenne (3) jeweils an einem symmetrischen Anschluss (A_{S}) des ersten Balun (22) und die erste Empfangsantenne (4) und die zweite Empfangsantenne (5) jeweils an einem symmetrischen Anschluss (A_{S}) des zweiten Balun (23) angeschlossen sind, wobei ein asymmetrischer Anschluss (A_{A}) des ersten Balun (22) mit einem Sendesignalpfad (S) der Transceiveranordnung (17) und ein asymmetrischer Anschluss (A_{A}) des zweiten Balun (23) mit einem von dem Sendesignalpfad (S) unabhängigen Empfangssignalpfad (E) der Transceiveranordnung (17) verbindbar ist, und wobei die erste Sendeantenne (2), die zweite Sendeantenne (3), die erste Empfangsantenne (4) und die zweite Empfangsantenne (5) eine relative räumliche Lage zueinander aufweisen, so dass ein Übersprechen zwischen der Sendeantennengruppe und der Empfangsantennengruppe durch die differenzielle Verschaltung deren jeweiliger Antennen (2, 3, 4, 5) zumindest reduziert wird, wobei jede der Empfangsantennen (4, 5) zu beiden Sendeantennen (2, 3) denselben Mitte-zu-Mitte-Abstand (D) aufweist.

2. Antennenanordnung (1) nach Anspruch 1,
**dadurch gekennzeichnet, dass**
die Sendeantennen (2, 3) und die Empfangsantennen (4, 5) um einen gemeinsamen Mittelpunkt (Z) herum angeordnet sind, vorzugsweise auf einem gemeinsamen, gedachten Kreisumfang (K).

3. Antennenanordnung (1) nach Anspruch 2,
**dadurch gekennzeichnet, dass**
die Sendeantennen (2, 3) der Sendeantennengruppe in Bezug auf den gemeinsamen Mittelpunkt (Z) um 180° zueinander verdreht angeordnet sind und/oder die Empfangsantennen (4, 5) der Empfangsantennengruppe in Bezug auf den gemeinsamen Mittelpunkt (Z) um 180° zueinander verdreht angeordnet sind, und wobei die erste Empfangsantenne (4) in Bezug auf den gemeinsamen Mittelpunkt (Z) vorzugsweise um 90° zu den Sendeantennen (2, 3) verdreht angeordnet ist.

4. Antennenanordnung (1) nach einem der Ansprüche 1 bis 3,
**dadurch gek*e*nnzeichnet**, dass
jede der Empfangsantennen (4, 5) der Empfangsantennengruppe jeweils weniger als die halbe Freiraumwellenlänge (λ) einer zu übertragenden elektromagnetischen Welle von den Sendeantennen (2, 3) der Sendeantennengruppe beanstandet ist.

5. Antennenanordnung (1) nach einem der Ansprüche 1 bis 4,
**dadurch gekennzeichnet, dass**
die erste Sendeantenne (2), die zweite Sendeantenne (3), die erste Empfangsantenne (4) und die zweite Empfangsantenne (5) als planare Antennen ausgebildet sind, deren Hauptflächen (6) parallel zu einer gemeinsamen Basisfläche (7) ausgerichtet sind, vorzugsweise parallel zu einer Seitenfläche einer elektrischen Leiterplatte (8), mit denen sie elektrisch und mechanisch verbunden sind.

6. Antennenanordnung (1) nach Anspruch 5,
**dadurch gekennzeichnet, dass**
die Hauptflächen (6) der planaren Antennen (2, 3, 4, 5) eine längliche Geometrie aufweisen, vorzugsweise eine rechteckige oder elliptische Geometrie.

7. Antennenanordnung (1) nach Anspruch 5 oder 6,
**dadurch gekennzeichnet, dass**
jede der planaren Antennen (2, 3, 4, 5) so gestaltet ist, dass deren Hauptfläche (6) eine endliche, von Null verschiedene Anzahl von Symmetrieachsen aufweist, vorzugsweise genau zwei Symmetrieachsen oder genau drei Symmetrieachsen.

8. Antennenanordnung (1) nach Anspruch 7,
**dadurch gekennzeichnet, dass**
die planaren Antennen (2, 3, 4, 5) jeweils einen Orientierungswinkel (α) zwischen einer Hauptsymmetrieachse (H), bei der es sich um die Längste der Symmetrieachsen der entsprechenden planaren Antenne (2, 3, 4, 5) handelt, und einer Geraden, die zwischen dem geometrischen Schwerpunkt der entsprechenden planaren Antenne (2, 3, 4, 5) und dem gemeinsamen Mittelpunkt (Z) der Antennen (2, 3, 4, 5) verläuft, ausbilden, und wobei die planaren Antennen (2, 3, 4, 5) derart zueinander ausgerichtet sind, dass die Orientierungswinkel (α) aller planaren Antennen (2, 3, 4, 5) zumindest im Wesentlich identisch sind, vorzugsweise identisch sind.

9. Antennenanordnung (1) nach einem der Ansprüche 1 bis 8,
**gekennzeichnet durch**
eine um die erste Sendeantenne (2), die zweite Sendeantenne (3), die erste Empfangsantenne (4) und die zweite Empfangsantenne (5) herum angeordnete Dämpfungsanordnung (37), die zumindest eine erste Dämpfungseinheit (38) mit einer Zugangsöffnung (39) aufweist, innerhalb der die besagten Antennen (2, 3, 4, 5) gemeinsam angeordnet sind, wobei die Mittelachse (M_{D}) der Zugangsöffnung (39) entlang einer Hauptabstrahlrichtung der Antennenanordnung (1) und/oder **durch** den gemeinsamen Mittelpunkt (Z) besagter Antennen (2, 3, 4, 5) verläuft.

10. Antennenanordnung (1) nach Anspruch 9,
**dadurch gekennzeichnet, dass**
die Dämpfungsanordnung (37) eine zweite Dämpfungseinheit (41) mit einer Zugangsöffnung (39) aufweist, innerhalb der die besagten Antennen (2, 3, 4, 5) gemeinsam angeordnet sind, wobei die erste Dämpfungseinheit (38) und die zweite Dämpfungseinheit (41) konzentrisch angeordnet sind, und wobei sich die erste Dämpfungseinheit (38) und die zweite Dämpfungseinheit (41) geometrisch und/oder durch deren jeweilige Materialzusammensetzung unterscheiden.

11. Transceiveranordnung (17), aufweisend eine Antennenanordnung (1) gemäß einem der Ansprüche 1 bis 10, sowie den Sendesignalpfad (S) und den Empfangssignalpfad (E), wobei der asymmetrische Anschluss (A_{A}) des ersten Balun (22) mit dem Sendesignalpfad (S) und der asymmetrische Anschluss (A_{A}) des zweiten Balun (23) mit dem Empfangssignalpfad (E) verbunden ist, und wobei der Sendesignalpfad (S) eine Sendeeinheit (19) und der Empfangssignalpfad (E) eine Empfangseinheit (20) aufweist.

12. Kommunikationssystem (25), aufweisend eine erste Transceiveranordnung (17) und eine zweite Transceiveranordnung (17), jeweils gemäß Anspruch 11, zur Bereitstellung einer drahtlosen Signalübertragung zwischen den Transceiveranordnungen (17).

13. Kommunikationssystem (25) nach Anspruch 12,
**dadurch gekennzeichnet, dass**
die beiden Transceiveranordnungen (17) relativ zueinander um eine gemeinsame Drehachse drehbar sind, wobei die Mittelpunkte (Z) der jeweiligen Antennenanordnungen (1) vorzugsweise koaxial zueinander angeordnet sind und mit der gemeinsamen Drehachse zusammenfallen.

14. Aktuatoreinrichtung (33), insbesondere Industrierobotersystem, aufweisend ein erstes Aktuatorglied (35), ein zweites Aktuatorglied (36) und ein Kommunikationssystem (25) gemäß Anspruch 13, wobei die erste Transceiveranordnung (17) an dem ersten Aktuatorglied (35) und die zweite Transceiveranordnung (17) an dem zweiten Aktuatorglied (36) angeordnet ist, um eine drahtlose Signalübertragung zwischen den beiden Aktuatorgliedern (35, 36) zu ermöglichen.

15. Verfahren zum Betreiben einer Antennenanordnung (1) einer Transceiveranordnung (17), insbesondere einer Hochfrequenz-Transceiveranordnung, aufweisend zumindest die folgenden Verfahrensschritte:
a) Bereitstellen einer Sendeantennengruppe aus einer ersten Sendeantenne (2) und einer zweiten Sendeantenne (3), die jeweils an einem symmetrischen Anschluss (A_{S}) eines ersten Balun (22) angeschlossen sind;
b) Bereitstellen einer Empfangsantennengruppe aus einer ersten Empfangsantenne (4) und einer zweiten Empfangsantenne (5), die jeweils an einem symmetrischen Anschluss (As) eines zweiten Balun (23) angeschlossen sind;
c) Betreiben der Sendeantennengruppe über einen Sendesignalpfad (S) der Transceiveranordnung (17), der mit dem ersten Balun (22) über dessen asymmetrischen Anschluss (A_{A}) verbunden ist;
d) Betreiben der Empfangsantennengruppe über einen von dem Sendesignalpfad (S) unabhängigen Empfangssignalpfad (E) der Transceiveranordnung (17), der mit dem zweiten Balun (23) über dessen asymmetrischen Anschluss (A_{A}) verbunden ist; wobei
die erste Sendeantenne (2), die zweite Sendeantenne (3), die erste Empfangsantenne (4) und die zweite Empfangsantenne (5) in einer relativen räumlichen Lage zueinander angeordnet sind, so dass Übersprechen zwischen der Sendeantennengruppe und der Empfangsantennengruppe aufgrund der differenziellen Verschaltung deren jeweiliger Antennen (2, 3, 4, 5) zumindest reduziert wird, wobei jede der Empfangsantennen (4, 5) zu beiden Sendeantennen (2, 3) denselben Mitte-zu-Mitte-Abstand (D) aufweist.

## Claims

1. An antenna arrangement (1) for a transceiver arrangement (17), in particular for a high-frequency transceiver arrangement, having a transmit antenna group having a first transmit antenna (2), a second transmit antenna (3) and a first balun (22), and a receive antenna group having a first receive antenna (4), a second receive antenna (5) and a second balun (23), wherein the first transmit antenna (2) and the second transmit antenna (3) are connected in each case to a symmetric connection (As) of the first balun (22), and the first receive antenna (4) und the second receive antenna (5) are connected in each case to a symmetric connection (As) of the second balun (23), wherein an asymmetric connection (A_{A}) of the first balun (22) is connectable to a transmit signal path (S) of the transceiver arrangement (17), and an asymmetric connection (A_{A}) of the second balun (23) is connectable to a receive signal path (E) of the transceiver arrangement (17) independent from the transmit signal path (S), and wherein the first transmit antenna (2), the second transmit antenna (3), the first receive antenna (4) and the second receive antenna (5) have a spatial position relative to one another such that crosstalk between the transmit antenna group and the receive antenna group is at least reduced by the differential connection of their respective antennas (2, 3, 4, 5), wherein each of the receive antennas (4, 5) has the same center-to-center distance (D) to both transmit antennas (2, 3).

2. The antenna arrangement (1) as claimed in claim 1,
**characterized in that**
the transmit antennas (2, 3) and the receive antennas (4, 5) are arranged around a common central point (Z), preferably on a common, imaginary circumference (K).

3. The antenna arrangement (1) as claimed in claim 2,
**characterized in that**
the transmit antennas (2, 3) of the transmit antenna group, in relation to the common central point (Z), are arranged rotated through 180° relative to one another and/or the receive antennas (4, 5) of the receive antenna group, in relation to the common central point (Z), are arranged rotated through 180° relative to one another, and wherein the first receive antenna (4), in relation to the common central point (Z), is preferably arranged rotated through 90° relative to the transmit antennas (2, 3).

4. The antenna arrangement (1) as claimed in one of claims 1 to 3,
**characterized in that**
each of the receive antennas (4, 5) of the receive antenna group is distanced in each case from the transmit antennas (2, 3) of the transmit antenna group by less than half the free-space wavelength (λ) of an electromagnetic wave to be transmitted.

5. The antenna arrangement (1) as claimed in one of claims 1 to 4,
**characterized in that**
the first transmit antenna (2), the second transmit antenna (3), the first receive antenna (4) and the second receive antenna (5) are designed as planar antennas, the main areas (6) of which are aligned parallel to a common base area (7), preferably parallel to a side area of an electrical printed circuit board (8) to which they are electrically and mechanically connected.

6. The antenna arrangement (1) as claimed in claim 5,
**characterized in that**
the main areas (6) of the planar antennas (2, 3, 4, 5) have an elongated geometry, preferably a rectangular or elliptical geometry.

7. The antenna arrangement (1) as claimed in claim 5 or 6,
**characterized in that**
each of the planar antennas (2, 3, 4, 5) is designed such that its main area (6) has a finite, non-zero number of axes of symmetry, preferably precisely two axes of symmetry or precisely three axes of symmetry.

8. The antenna arrangement (1) as claimed in claim 7,
**characterized in that**
the planar antennas (2, 3, 4, 5) in each case form an orientation angle (α) between a main axis of symmetry (H), which involves the longest of the axes of symmetry of the corresponding planar antenna (2, 3, 4, 5), and a straight line which runs between the geometric center of the corresponding planar antenna (2, 3, 4, 5) and the common central point (Z) of the antennas (2, 3, 4, 5), and wherein the planar antennas (2, 3, 4, 5) are aligned relative to one another in such a way that the orientation angles (α) of all planar antennas (2, 3, 4, 5) are at least essentially identical, preferably identical.

9. The antenna arrangement (1) as claimed in one of claims 1 to 8,
**characterized by**
an attenuation arrangement (37) which is arranged around the first transmit antenna (2), the second transmit antenna (3), the first receive antenna (4) and the second receive antenna (5) and which has at least one first attenuation unit (38) having an access opening (39) within which said antennas (2, 3, 4, 5) are jointly arranged, wherein the central axis (M_{D}) of the access opening (39) runs along a main radiation direction of the antenna arrangement (1) and/or through the common central point (Z) of said antennas (2, 3, 4, 5).

10. The antenna arrangement (1) as claimed in claim 9,
**characterized in that**
the attenuation arrangement (37) has a second attenuation unit (41) having an access opening (39) within which said antennas (2, 3, 4, 5) are jointly arranged, wherein the first attenuation unit (38) and the second attenuation unit (41) are arranged concentrically, and wherein the first attenuation unit (38) and the second attenuation unit (41) differ from one another geometrically and/or in terms of their respective material composition.

11. A transceiver arrangement (17), having an antenna arrangement (1) as claimed in one of claims 1 to 10, and also the transmit signal path (S) and the receive signal path (E), wherein the asymmetric connection (A_{A}) of the first balun (22) is connected to the transmit signal path (S) and the asymmetric connection (A_{A}) of the second balun (23) is connected to the receive signal path (E), and wherein the transmit signal path (S) has a transmit unit (19) and the receive signal path (20) has a receive unit (E).

12. A communication system (25), having a first transceiver arrangement (17) and a second transceiver arrangement (17), in each case as claimed in claim 11, for providing wireless signal transmission between the transceiver arrangements (17).

13. The communication system (25) as claimed in claim 12,
**characterized in that**
the two transceiver arrangements (17) are rotatable relative to one another around a common axis of rotation, wherein the central points (Z) of the respective antenna arrangements (1) are arranged preferably coaxially to one another and coincide with the common axis of rotation.

14. An actuator device (33), in particular an industrial robot system, having a first actuator element (35), a second actuator element (36) and a communication system (25) as claimed in claim 13, wherein the first transceiver arrangement (17) is arranged on the first actuator element (35) and the second transceiver arrangement (17) is arranged on the second actuator element (36) in order to enable wireless signal transmission between the two actuator elements (35, 36).

15. A method for operating an antenna arrangement (1) of a transceiver arrangement (17), in particular a high-frequency transceiver arrangement having at least the following method steps:
a) providing a transmit antenna group consisting of a first transmit antenna (2) and a second transmit antenna (3) which are connected in each case to a symmetric connection (As) of a first balun (22);
b) providing a receive antenna group consisting of a first receive antenna (4) and a second receive antenna (5) which are connected in each case to a symmetric connection (As) of a second balun (23);
c) operating the transmit antenna group via a transmit signal path (S) of the transceiver arrangement (17) which is connected to the first balun (22) via the asymmetric connection(A_{A}) of said first balun (22);
d) operating the receive antenna group via a receive signal path (E) of the transceiver arrangement (17) which is independent from the transmit signal path (S) and is connected to the second balun (23) via the asymmetric connection of said second balun (23); wherein
the first transmit antenna (2), the second transmit antenna (3), the first receive antenna (4) and the second receive antenna (5) are arranged in a spatial position relative to one another such that crosstalk between the transmit antenna group and the receive antenna group is at least reduced by means of the differential connection of their respective antennas (2, 3, 4, 5), wherein each of the receive antennas (4, 5) has the same center-to-center distance (D) to both transmit antennas (2, 3).

## Revendications

1. Agencement d'antenne (1) pour un agencement d'émetteur-récepteur (17), en particulier pour un agencement d'émetteur-récepteur haute fréquence, présentant un groupe d'antennes émettrices avec une première antenne émettrice (2), une deuxième antenne émettrice (3) et un premier symétriseur (22), et un groupe d'antennes réceptrices avec une première antenne réceptrice (4), une deuxième antenne réceptrice (5) et un deuxième symétriseur (23), dans lequel la première antenne émettrice (2) et la deuxième antenne émettrice (3) sont respectivement connectées à une borne symétrique (A_{S}) du premier symétriseur (22), et la première antenne réceptrice (4) et la deuxième antenne réceptrice (5) sont respectivement connectées à une borne symétrique (A_{S}) du deuxième symétriseur (23), dans lequel une borne asymétrique (A_{A}) du premier symétriseur (22) peut être reliée à un trajet de signal d'émission (S) de l'agencement d'émetteur-récepteur (17), et une borne asymétrique (A_{A}) du deuxième symétriseur (23) peut être reliée à un trajet de signal de réception (E) de l'agencement d'émetteur-récepteur (17), indépendant du trajet de signal d'émission (S), et dans lequel la première antenne émettrice (2), la deuxième antenne émettrice (3), la première antenne réceptrice (4) et la deuxième antenne réceptrice (5) présentent une position spatiale relative les unes par rapport aux autres de telle sorte qu'une diaphonie entre le groupe d'antennes émettrices et le groupe d'antennes réceptrices est au moins réduite par le câblage différentiel de leurs antennes (2, 3, 4, 5) respectives, dans lequel chacune des antennes réceptrices (4, 5) présente la même distance de centre à centre (D) par rapport aux deux antennes émettrices (2, 3).

2. Agencement d'antenne (1) selon la revendication 1, **caractérisé en ce que** les antennes émettrices (2, 3) et les antennes réceptrices (4, 5) sont disposées autour d'un centre commun (Z), de préférence sur une même circonférence (K) imaginaire.

3. Agencement d'antenne (1) selon la revendication 2, **caractérisé en ce que** les antennes émettrices (2, 3) du groupe d'antennes émettrices sont disposées de manière pivotée de 180° l'une par rapport à l'autre concernant le centre commun (Z), et/ou les antennes réceptrices (4, 5) du groupe d'antennes réceptrices sont disposées de manière pivotées de 180° l'une par rapport à l'autre concernant le centre commun (Z), et dans lequel la première antenne réceptrice (4) est disposée de préférence de manière pivotée de 90° par rapport aux antennes émettrices (2, 3) concernant le centre commun (Z) .

4. Agencement d'antenne (1) selon l'une quelconque des revendications 1 à 3, **caractérisé en ce que** chacune des antennes réceptrices (4, 5) du groupe d'antennes réceptrices est respectivement espacée des antennes émettrices (2, 3) du groupe d'antennes émettrices de moins de la demi-longueur d'onde d'espace libre (X) d'une onde électromagnétique à transmettre.

5. Agencement d'antenne (1) selon l'une quelconque des revendications 1 à 4, **caractérisé en ce que** la première antenne émettrice (2), la deuxième antenne émettrice (3), la première antenne réceptrice (4) et la deuxième antenne réceptrice (5) sont réalisées comme des antennes planaires dont les surfaces principales (6) sont alignées en parallèle à une surface de base commune (7), de préférence en parallèle à une surface latérale d'une carte de circuits imprimés électrique (8), auxquelles elles sont reliées électriquement et mécaniquement.

6. Agencement d'antenne (1) selon la revendication 5, **caractérisé en ce que** les surfaces principales (6) des antennes planaires (2, 3, 4, 5) présentent une géométrie allongée, de préférence une géométrie rectangulaire ou elliptique.

7. Agencement d'antenne (1) selon la revendication 5 ou 6, **caractérisé en ce que** chacune des antennes planaires (2, 3, 4, 5) est configurée de telle sorte que sa surface principale (6) présente un nombre fini, différent de zéro, d'axes de symétrie, de préférence exactement deux axes de symétrie ou exactement trois axes de symétrie.

8. Agencement d'antenne (1) selon la revendication 7, **caractérisé en ce que** les antennes planaires (2, 3, 4, 5) réalisent respectivement un angle d'orientation (α) entre un axe de symétrie principal (H), qui est le plus long des axes de symétrie de l'antenne planaire (2, 3, 4, 5) correspondante, et une droite qui s'étend entre le barycentre de l'antenne planaire (2, 3, 4, 5) correspondante et le centre commun (Z) des antennes (2, 3, 4, 5), et dans lequel les antennes planaires (2, 3, 4, 5) sont alignées les unes par rapport aux autres de telle sorte que les angles d'orientation (α) de toutes les antennes planaires (2, 3, 4, 5) sont au moins substantiellement identiques, étant de préférence identiques.

9. Agencement d'antenne (1) selon l'une quelconque des revendications 1 à 8, **caractérisé par** un agencement d'atténuation (37) disposé autour de la première antenne émettrice (2), de la deuxième antenne émettrice (3), de la première antenne réceptrice (4) et de la deuxième antenne réceptrice (5) et qui présente au moins une première unité d'atténuation (38) pourvue d'une ouverture d'accès (39) à l'intérieur de laquelle lesdites antennes (2, 3, 4, 5) sont disposées ensemble, dans lequel l'axe médian (M_{D}) de l'ouverture d'accès (39) s'étend le long d'une direction de rayonnement principale de l'agencement d'antenne (1) et/ou par le centre commun (Z) desdites antennes (2, 3, 4, 5).

10. Agencement d'antenne (1) selon la revendication 9, **caractérisé en ce que** l'agencement d'atténuation (37) présente une deuxième unité d'atténuation (41) pourvue d'une ouverture d'accès (39) à l'intérieur de laquelle lesdites antennes (2, 3, 4, 5) sont disposées ensemble, dans lequel la première unité d'atténuation (38) et la deuxième unité d'atténuation (41) sont disposées de manière concentrique, et dans lequel la première unité d'atténuation (38) et la deuxième unité d'atténuation (41) se distinguent sur le plan géométrique et/ou par leur composition matérielle respective.

11. Agencement d'émetteur-récepteur (17), présentant un agencement d'antenne (1) selon l'une quelconque des revendications 1 à 10, ainsi que le trajet de signal d'émission (S) et le trajet de signal de réception (E), dans lequel la borne asymétrique (A_{A}) du premier symétriseur (22) est reliée au trajet de signal d'émission (S) et la borne asymétrique (A_{A}) du deuxième symétriseur (23) est reliée au trajet de signal de réception (E), et dans lequel le trajet de signal d'émission (S) présente une unité d'émission (19) et le trajet de signal de réception (E) présente une unité de réception.

12. Système de communication (25), présentant un premier agencement d'émetteur-récepteur (17) et un deuxième agencement d'émetteur-récepteur (17), respectivement selon la revendication 11, pour fournir une transmission de signal sans fil entre les agencements d'émetteur-récepteur (17).

13. Système de communication (25) selon la revendication 12, **caractérisé en ce que** les deux agencements d'émetteur-récepteur (17) peuvent pivoter l'un par rapport à l'autre autour d'un axe de rotation commun, dans lequel les centres (Z) des agencements d'antenne (1) respectifs sont de préférence disposés de manière coaxiale l'un par rapport à l'autre et coïncident avec l'axe de rotation commun.

14. Dispositif actionneur (33), en particulier système robotique industriel, présentant un premier élément actionneur (35), un deuxième élément actionneur (36) et un système de communication (25) selon la revendication 13, dans lequel le premier agencement d'émetteur-récepteur (17) est disposé sur le premier élément actionneur (35) et le deuxième agencement d'émetteur-récepteur (17) est disposé sur le deuxième élément actionneur (36) afin de permettre une transmission de signal sans fil entre les deux éléments actionneurs (35, 36).

15. Procédé permettant de faire fonctionner un agencement d'antenne (1) d'un agencement d'émetteur-récepteur (17), en particulier d'un agencement d'émetteur-récepteur haute fréquence, présentant au moins les étapes de procédé suivantes consistant à :
a) fournir un groupe d'antennes émettrices composé d'une première antenne émettrice (2) et d'une deuxième antenne émettrice (3) qui sont respectivement connectées à une borne symétrique (A_{S}) d'un premier symétriseur (22) ;
b) fournir un groupe d'antennes réceptrices composé d'une première antenne réceptrice (4) et d'une deuxième antenne réceptrice (5) qui sont respectivement connectées à une borne symétrique (A_{S}) d'un deuxième symétriseur (23) ;
c) faire fonctionner le groupe d'antennes émettrices sur un trajet de signal d'émission (S) de l'agencement d'émetteur-récepteur (17) qui est relié au premier symétriseur (22) par l'intermédiaire de la borne asymétrique (A_{A}) de celui-ci ;
d) faire fonctionner le groupe d'antennes réceptrices sur un trajet de signal de réception (E) de l'agencement d'émetteur-récepteur (17), indépendant du trajet de signal d'émission (S), qui est relié au deuxième symétriseur (23) par l'intermédiaire de la borne asymétrique (A_{A}) de celui-ci ; dans lequel
la première antenne émettrice (2), la deuxième antenne émettrice (3), la première antenne réceptrice (4) et la deuxième antenne réceptrice (5) présentent une position spatiale relative les unes par rapport aux autres de telle sorte qu'une diaphonie entre le groupe d'antennes émettrices et le groupe d'antennes réceptrices est au moins réduite par le câblage différentiel de leurs antennes (2, 3, 4, 5) respectives, dans lequel chacune des antennes réceptrices (4, 5) présente la même distance de centre à centre (D) par rapport aux deux antennes émettrices (2, 3).
